(19) **Europäisches Patentamt / European Patent Office / Office européen des brevets**

(11) **EP 4 741 155 A1**

(12) **EUROPEAN PATENT APPLICATION**
published in accordance with Art. 153(4) EPC

(43) Date of publication:
**13.05.2026 Bulletin 2026/20**

(21) Application number: **24885285.7**

(22) Date of filing: **06.09.2024**

(51) International Patent Classification (IPC):
**B32B 15/09** $^{(2006.01)}$     **B65D 1/12** $^{(2006.01)}$
**B65D 65/42** $^{(2006.01)}$

(52) Cooperative Patent Classification (CPC):
**B32B 15/09; B65D 1/12; B65D 65/42**

(86) International application number:
**PCT/JP2024/032024**

(87) International publication number:
**WO 2025/094508 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.10.2023 JP 2023185993**
**30.10.2023 JP 2023185997**

(71) Applicant: **Nippon Steel Corporation Tokyo 100-8071 (JP)**

(72) Inventors:
• **KADOWAKI, Nobuo**
  **Tokyo 100-8071 (JP)**
• **TAJIMA, Yuta**
  **Tokyo 100-8071 (JP)**
• **IWAKIRI, Kazushi**
  **Tokyo 100-8071 (JP)**
• **MIZUTANI, Tomohiro**
  **Tokyo 100-8071 (JP)**

(74) Representative: **Vossius & Partner**
**Patentanwälte Rechtsanwälte mbB**
**Siebertstraße 3**
**81675 München (DE)**

(54) **FILM-LAMINATED STEEL SHEET AND METHOD FOR MANUFACTURING DRAWN AND IRONED CAN**

(57)     [SUMMARY]
[PROBLEM] To further improve punch-withdrawing performance while maintaining ironing formability during DI forming.

[SOLUTION] A film-laminated steel sheet according to the present invention includes: a steel sheet serving as a base material; film layers formed by thermoplastic polyester films provided on front and rear surfaces of the steel sheet; and wax layers provided on the film layers, wherein a coating weight of the wax layer is within a range of 0.030 to 0.135 g/m$^2$ per side, the coating weights of the wax layers are different between the front surface and rear surface of the steel sheet, and a coating weight ratio, which is obtained by dividing the coating weight of the wax layer on a side with a higher coating weight by the coating weight of the wax layer on a side with a lower coating weight, is within a range of 1.05 to 1.35.

FIG. 1

**Description**

TECHNICAL FIELD

The present invention relates to film-laminated steel sheets and a method for manufacturing DI cans.

BACKGROUND ART

In recent years, paper-wrapped cans and distortion-printing cans have been primary types used for food packaging. Particularly for distortion-printing cans, it is crucial that a printed pattern does not distort during forming. Therefore, a can height is set relatively low, and forming methods most commonly used are drawn (DR) forming and drawing-and-redrawing (DRD) forming. On the other hand, since paper-wrapped cans do not require printing on an outer surface of a can body, drawn-and-ironing (DI) forming, which offers superior productivity, has become increasingly used in recent years.

The DI forming is a forming method that reduces a thickness of a can wall to approximately 40 to 60% of a thickness of a steel sheet used as a material by drawn forming the steel sheet into a cup shape and then iron forming a part of the obtained cup corresponding to the can wall to increase a can height. The DI forming is characterized in that deformation amounts in both a sheet-thickness direction of the steel sheet and a can height direction are significantly large, along with a faster forming speed compared to the DRD forming. A temperature of the steel sheet during DI forming rises to nearly 200°C. Therefore, for example, in the DI forming of a tin plate, a type of tin-plated steel sheet, a coolant containing lubricant is sprayed onto an ironing die during forming to cool it. Since the coolant sprayed onto the ironing die adheres to the formed DI can, a process is required to wash the coolant off the formed DI can and then dry the washed DI can. Furthermore, a treatment facility for such coolant has been necessary as part of a manufacturing facility.

On the other hand, film-laminated steel sheets enable wax to be coated on a film surface during a manufacturing process of the laminated steel sheets. Therefore, when using the film-laminated steel sheets to manufacture cans, there is no need to apply lubricant during forming. This eliminates the need for lubricant washing and drying processes, as well as a lubricant treatment facility. Due to these advantages, the film-laminated steel sheets have been widely used in DRD food cans in recent years.

However, when applying the film-laminated steel sheets to forming processes such as the DI forming, where the can wall is rapidly ironed, the steel sheet temperature rises during forming. This causes the film to soften, making the film prone to abrasion and increasing a probability of fracture of a can body during forming. Furthermore, the softened film on a can inner surface closely adheres to a punch used during processing, making it difficult to withdraw the punch and resulting in poor punch-withdrawing performance. Poor punch-withdrawing performance may cause a can end to buckle and get caught between the punch and a stopper, while also making the can body prone to buckling. In such cases, a canmaking machine must be stopped to remove the jammed can end between the punch and stopper, significantly deteriorating productivity. From this perspective, various film-laminated steel sheets suitable for the DI forming have been proposed.

For example, Patent Document 1 below discloses a laminated metal sheet for a two-piece can body, wherein both surfaces of the metal sheet have polyester resin film layers, a crystallization temperature of the polyester resin film layer on an outer surface side of the can body is 60 to 100°C, and centerline surface roughness (Ra) of the surface is 0.25 to 1.8 $\mu$m. Furthermore, Patent Document 1 below discloses a laminated metal sheet for a two-piece can body wherein the polyester resin film layer becoming the outer surface side of the can body is composed of: a resin having buthylene terephthalate as a main constituent unit: 40 to 100 mass%, and a resin having ethylene terephthalate as a main constituent unit: 0 to 60 mass%, and the centerline surface roughness (Ra) on a surface of a film layer becoming an inner surface side of the can body is 0.2 to 1.8 $\mu$m.

Furthermore, Patent Document 2 below discloses a laminated steel sheet for a container with excellent blanking and drawing canmaking workability, in which protrusions with a height of 2 to 10 $\mu$m and a circle equivalent diameter d of 0.010 to 0.10 mm are formed on a film surface at a density of 15 pieces/mm2 or more, and a space containing air or inert gas exists between a resin film directly beneath the protrusion and the steel sheet.

PRIOR ART DOCUMENT

PATENT DOCUMENT

Patent Document 1: Japanese Laid-open Patent Publication No. 2009-184262
Patent Document 2: Japanese Laid-open Patent Publication No. 2009-23193

## SUMMARY OF THE INVENTION

### PROBLEMS TO BE SOLVED BY THE INVENTION

As described above, to enhance ironing formability of the film-laminated steel sheet, conventional methods have involved creating surface irregularities on the film surface to reduce a contact area and lower friction. However, as mentioned earlier, performing continuous high-speed DI forming causes the steel sheet temperature to rise. Consequently, even when using laminated steel sheets as disclosed in Patent Documents 1 and 2, there remained room for improvement in achieving both good ironing formability and good punch-withdrawing performance.

Accordingly, the present invention was made in view of the above problems, and an object thereof is to provide a film-laminated steel sheet capable of further improving punch-withdrawing performance while maintaining ironing formability during DI forming, and a method for manufacturing a DI can using such a film-laminated steel sheet.

### MEANS FOR SOLVING THE PROBLEMS

To solve the above issues, the inventors diligently investigated and conceived that it is possible to further improve punch-withdrawing performance while maintaining ironing formability during DI forming by optimizing a balance between sliding property of a side of a film-laminated steel sheet that becomes an inner surface of a can and the sliding property of a side that becomes an outer surface of the can.

The gist of the present invention, completed based on this concept, is summarized as follows. Note that in the following description, the notation "(numeric value A) to (numeric value B)" means "(numeric value A) or more and (numeric value B) or less."

(1) A film-laminated steel sheet, including: a steel sheet serving as a base material; a film layer formed by a thermoplastic polyester film provided on front and rear surfaces of the steel sheet; and a wax layer provided on the film layer, wherein a coating weight of the wax layer is within a range of 0.030 to 0.135 g/m$^2$ per side, and the coating weights of the wax layers are different between the front surface and rear surface of the steel sheet, and a coating weight ratio, which is obtained by dividing the coating weight of the wax layer on a side with a higher coating weight by the coating weight of the wax layer on a side with a lower coating weight, is within a range of 1.05 to 1.35.

(2) The film-laminated steel sheet according to (1), wherein a melting point of the thermoplastic polyester film forming the film layer on the side with the lower coating weight is 215°C or higher and less than 255°C, a melting point of the thermoplastic polyester film forming the film layer on the side with the higher coating weight is 220 to 260°C, and the melting point of the thermoplastic polyester film on the side with the higher coating weight is 5°C or more higher than the melting point of the thermoplastic polyester film on the side with the lower coating weight.

(3) The film-laminated steel sheet according to (1) or (2), wherein penetration of wax forming the wax layer specified in JIS K2235:2022 is 5 to 20 at a test temperature of 25°C, and a melting point of the wax is 50.0 to 70.0°C.

(4) The film-laminated steel sheet according to any one of (1) to (3), wherein a thickness of the film layer on the side with the lower coating weight is 12 to 40 μm.

(5) The film-laminated steel sheet according to any one of (1) to (4), wherein surface roughness of the steel sheet on the side with the lower coating weight, measured as arithmetic mean roughness Ra specified in JIS B0601:2013, is 0.10 to 0.50 μm.

(6) The film-laminated steel sheet according to any one of (1) to (5), wherein the coating weight of the wax layer is more than 0.120 g/m$^2$ and 0.135 g/m$^2$ or less per side.

(7) A method for manufacturing a DI can, which uses the film-laminated steel sheet according to any one of (1) to (6), including: arranging the film-laminated steel sheet such that a surface on a side with a lower coating weight of a wax layer becomes a surface of the DI can on an outer surface side, and a surface on a side with a higher coating weight of the wax layer becomes a surface of the DI can on an inner surface side; and subjecting the film-laminated steel sheet to DI forming.

### EFFECT OF THE INVENTION

As described above, the present invention enables further improvement in punch-withdrawing performance while maintaining ironing formability during DI forming. This allows for enhanced high-speed forming of DI cans without deteriorating productivity of the DI cans.

BRIEF DESCRIPTION OF THE DRAWINGS

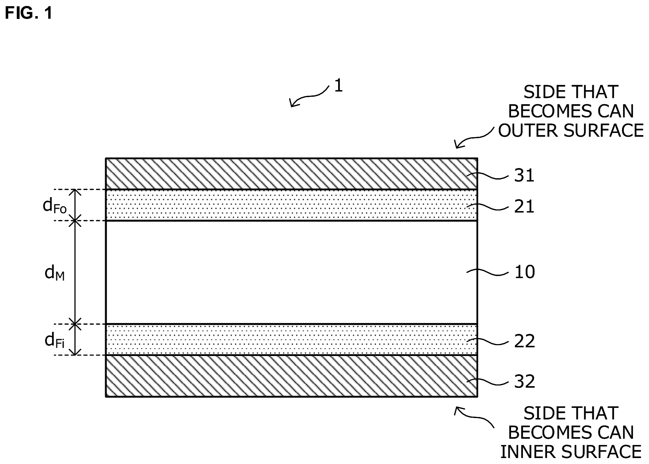

FIG. 1 is an explanatory diagram schematically illustrating a configuration of a film-laminated steel sheet according to an embodiment of the present invention.

EMBODIMENTS FOR CARRYING OUT INVENTION

Hereinafter, embodiments of the present invention will be described while referring to the drawings. Note that in the present description and the drawings, components having substantially the same functional configurations are denoted by the same codes to omit overlapped explanations.

(Film-laminated steel sheet)

<Configuration of film-laminated steel sheet>

Hereinafter, a configuration of a film-laminated steel sheet according to an embodiment of the present invention will be described with reference to FIG. 1. FIG. 1 is an explanatory diagram schematically illustrating the configuration of the film-laminated steel sheet of this embodiment.

The film-laminated steel sheet of this embodiment is used as a material for DI cans. As illustrated in FIG. 1, a film-laminated steel sheet 1 of this embodiment includes a base steel sheet 10 serving as a base material of the film-laminated steel sheet 1, film layers 21 and 22 provided on a front and rear surfaces of the base steel sheet 10, and wax layers 31 and 32 provided on the film layers.

In the film-laminated steel sheet 1 of this embodiment, a coating weight of wax on the wax layer 31 differs from a coating weight of wax on the wax layer 32 as described in detail below. FIG. 1 illustrates an example where the coating weight of wax on the wax layer 32 is higher than the coating weight of wax on the wax layer 31.

The difference in the coating weights of wax between the wax layers 31 and 32 described above is important when manufacturing DI cans using such a film-laminated steel sheet 1 as a raw material. As will be explained in detail below, when manufacturing the DI cans using the film-laminated steel sheet 1 of this embodiment, the film-laminated steel sheet 1 is arranged such that the wax layer with the higher coating weight of wax is located on a surface that will become an inner surface side of the DI can. That is, in a case of the film-laminated steel sheet 1 illustrated in FIG. 1, the film-laminated steel sheet 1 is arranged in a forming apparatus such that a surface with the wax layer 31 becomes a can outer surface of the DI can, and a surface with the wax layer 32 becomes a can inner surface of the DI can.

For convenience in the following description, the film layer located on the side that becomes the can outer surface of the DI can shall be referred to as a "can outer surface side film layer", and the wax layer located on the side that becomes the can outer surface shall be referred to as a "can outer surface side wax layer". Similarly, for convenience in the following description, the film layer located on the side that becomes the can inner surface of the DI can shall be referred to as a "can inner surface side film layer", and the wax layer located on the side that becomes the can inner surface shall be referred to as a "can inner surface side wax layer".

Further, when referring to the film layer without distinguishing between the can inner surface side and can outer surface side, it may be abbreviated simply as the "film layer". Similarly, when referring to the wax layer without distinguishing between the can inner surface side and can outer surface side, it may be abbreviated simply as the "wax layer".

«Base steel sheet 10»

In the film-laminated steel sheet 1 of this embodiment, a steel sheet used as the base steel sheet 10 may be any of various types known in the art for can steel sheets used in drawing.

Furthermore, among such can steel sheets for drawing, it is preferable to use those with an r-value of 1.00 or higher and an absolute value of Δr-value of 0.45 or lower as the base steel sheet 10. Using such can steel sheets enables further improvement in the DI formability of the film-laminated steel sheet 1 of this embodiment.

Drawn and ironing forming is a forming method that reduces a thickness of a can wall by pulling a can wall portion of an approximately cylindrical cup by means of iron forming. Therefore, when there is variation in the thickness of the can wall portion of the cup, ironing resistance at a thicker portion increases, making the can wall portion prone to fracture during the iron forming. Using the steel sheet with the r-value of 1.00 or higher as the base steel sheet 10 suppresses thickness variation of the can wall portion along a cup height direction, thereby preventing can wall portion fracture during the iron forming. The r-value of the steel sheet used as the base steel sheet 10 is preferably 1.10 or higher. On the other hand, while no specific upper limit is prescribed for the r-value of the steel sheet used as the base steel sheet 10, approximately 1.20 is substantially the upper limit.

Furthermore, by setting the absolute value of the Δr-value at 0.45 or lower (that is, -0.45 ≤ Δr ≤ +0.45), it is possible to suppress variations in the thickness of the can wall portion of the cup in a circumferential direction, thereby preventing fracture of the can wall portion during iron forming. The absolute value of the Δr-value for the steel sheet used as the base steel sheet 10 is preferably 0.25 or lower. Note that while no specific lower limit is prescribed for the Δr-value of the steel sheet used as the base steel sheet 10, the lower the value, the better, with zero being most preferred.

The r-value and Δr-value mentioned above are specified in JIS Z2254:2021, and can be measured in accordance with JIS Z2254:2021. The r-value is also referred to as a plastic strain ratio or Lankford value. An initial gauge length, parallel portion width, and thickness of a tensile test piece specified in JIS Z2254:2021 are denoted as $L_0$, $W_0$, and $T_0$, respectively. The r-value is defined by the following equation when the above dimensions, after tensile deformation within a range where no necking has occurred, change to L, W, and T, respectively, based on the assumption of $L0 \times WO \times T0 = L \times W \times T$.

$$r = \ln(W_0/W) \,/\, \ln(T_0/T) = \ln(W_0/W) \,/\, \ln(LW/L_0W_0)$$

Furthermore, the Δr-value is an index representing in-plane anisotropy. When the r-value for an angle θ between a tensile direction of the above tensile test piece and a rolling direction of the material is denoted as $r_\theta$, and deformation characteristics are measured in each direction by varying θ, the Δr-value is defined by the following equation. Here, in the following equation, $r_0$, $r_{45}$, and $r_{90}$ are the r-values when angles formed by the tensile direction and the material rolling direction are 0°, 45°, and 90°, respectively.

$$\Delta r = (r_0 - 2 \times r_{45} + r_{90})/2$$

Furthermore, when the steel sheet used as the base steel sheet 10 is hard, a can body is prone to fracture during forming because elongation of the steel sheet during forming is low. Additionally, heat generated by the steel sheet during iron forming increases, making the film layer described later prone to softening due to the heat. Therefore, when forming DI cans with a high ironing ratio, it is particularly preferable to use a single-reduced material with a temper grade of T3 or lower as the base steel sheet 10.

Furthermore, in DI cans, when adhesive strength between the base steel sheet and the film layer is low, the film layer may peel off during iron forming. Therefore, higher adhesion between the base steel sheet 10 and the film layer is more preferable in the film-laminated steel sheet 1 of this embodiment. Concretely, a test piece with a size of 15 mm in width and 50 mm in height is taken from any location on the focused film-laminated steel sheet 1, and peel strength, which is measured by peeling either one of the film layers of the test piece at a speed of 20 mm/min over 180°, is 10 N/15 mm or more. This peel strength is preferably 15 N/15 mm or more. On the other hand, the higher the peel strength is, the better, and no upper limit is specifically prescribed.

As detailed below, the film layer in the film-laminated steel sheet 1 of this embodiment is formed by thermoplastic polyester. Steel sheets exhibiting excellent adhesion to polyester include, for example, chromium-based tin-free steel ECCS (electrolytic chromium coated steel) and chromium-free tin-free steel.

Chromium-based tin-free steel is a plated steel sheet in which a chromium metal layer and a chromium oxide hydrate layer are sequentially formed on each of front and rear surfaces of the base steel sheet. A surface of such a tin-free steel readily forms hydrogen bonds with a hydroxyl group and a carbonyl group held by a polyester resin, thereby improving adhesion between the steel sheet and the film layer.

Furthermore, a surface of the chromium-free tin-free steel sheet, which is composed of one or more elements selected from Zr, Al, Si, P, Ti, Ce, and W, O, and unavoidable components, and forms a chromium-free coating film on the front and rear surfaces of the steel sheet, preferably has the hydroxyl group. Such a hydroxyl group forms the hydrogen bond with the hydroxyl group and the carbonyl group held by the polyester resin, thereby improving the adhesion between the steel sheet and the film layer.

Furthermore, examples of the base steel sheet 10 include tinplate in which electro-tin plated steel sheet is subjected to chromate treatment, and chromate-free tinplate having the aforementioned chromium-free coating film applied to the electro-tin plated steel sheet, for example, in addition to the aforementioned chromium-based tin-free steel and chromium-free tin-free steel.

Using steel sheets as described above as the base steel sheet 10 improves adhesion with the film layer, making it easier to achieve the peel strength described earlier.

[Thickness of base steel sheet]

In the film-laminated steel sheet 1 of this embodiment, a thickness of the base steel sheet 10 (thickness $d_M$ in FIG. 1) is not particularly specified, as long as it is sufficient to achieve a desired thickness of the can wall portion after DI forming.

The thickness of the base steel sheet 10 may be, for example, approximately 0.15 to 0.26 mm.

The following procedure may be used to measure the thickness of the base steel sheet as described above from a state of the already manufactured film-laminated steel sheet 1. That is, the film-laminated steel sheet is immersed in boiling hydrogen peroxide solution to peel off the film (the film usually peels off within 30 minutes). After the film has been peeled off, the thickness of the base steel sheet is measured using a micrometer.

[Surface roughness of base steel sheet]

In general deep drawing, it is preferable for surface roughness of the film of the laminated steel sheet to be relatively high, creating a state where a die surface and a protruding surface of the film make point contact, as this reduces sliding resistance. However, in the DI forming focused in this embodiment, even if the surface roughness of the film layer is increased, the film softens due to the rise in steel sheet temperature during drawn and ironing forming, causing surface irregularities of the film layer to flatten. Therefore, the surface roughness of the base steel sheet 10 has a larger influence than the surface roughness of the film layer regarding the sliding resistance during DI forming.

Usually, in DI forming, a plurality of stages of ironing dies are arranged to form a steel sheet used as a material into a desired shape. When a film-laminated steel sheet with excessively low surface roughness of the base steel sheet is subjected to DI forming, the film layer surface becomes smoothed as it passes through a first ironing die. Simultaneously, wax accumulated in indentations caused by recesses in the base steel sheet becomes more prone to falling off. As a result, when the film-laminated steel sheet passes through the second and subsequent ironing dies, a sliding property of the film-laminated steel sheet may deteriorate, which may cause the abrasion of the film layer.

On the other hand, when a film-laminated steel sheet with excessively large surface roughness of the base steel sheet is subjected to DI forming, the film layer may soften due to the heat generated by the steel sheet as it passes through the first ironing die. This can lead to occurrence of pinholes in the film layer present on protrusions of the base steel sheet.

The aforementioned film layer abrasion and the occurrence of pinholes in the film layer are phenomena related to ironing properties during high-speed forming of DI cans, and both may occur in a can outer surface side film layer 21 illustrated in FIG. 1. Therefore, in the film-laminated steel sheet 1 of this embodiment, the surface roughness of the surface of the base steel sheet 10 on the side that becomes the can outer surface of the DI can (that is, the surface on which the can outer surface side film layer 21 is provided) is preferably 0.10 to 0.50 $\mu$m in the arithmetic mean roughness Ra, specified in JIS B0601:2013. Achieving the surface roughness of the surface of the base steel sheet 10 on the side that becomes the can outer surface side in Ra of 0.10 to 0.50 $\mu$m enables prevention of the film abrasion and the occurrence of pinholes even when performing DI forming at high speed. The surface roughness of the base steel sheet 10 on the side that becomes the can outer surface is more preferably 0.10 $\mu$m or more in Ra. The surface roughness of the base steel sheet 10 on the side that becomes the can outer surface is more preferably 0.30 $\mu$m or less in Ra.

Furthermore, in the film-laminated steel sheet 1 of this embodiment, it is even more preferable that the surface roughness of the base steel sheet 10 on the can outer surface side is set to 0.10 to 0.50 $\mu$m in Ra, and the thickness of the can outer surface side film layer 21, described in detail below, is set to 12 to 40 $\mu$m, thereby making it possible to further prevent the film abrasion and the occurrence of pinholes as described above, and occurrence of pressing flaws in the can outer surface side film layer 21.

The surface roughness of the base steel sheet 10 described above can be measured using a commercially available surface roughness tester compliant with JIS B0601:2013 (for example, a surface roughness and contour measuring instrument SURFCOM 570A, manufactured by Tokyo Seiki Co., Ltd.). More specifically, the wax layer and film layer are peeled off from the focused film-laminated steel sheet 1 using an immersion treatment with boiling hydrogen peroxide solution to expose the base steel sheet 10. A measurement sample with a size of 200 mm × 200 mm is then taken from any location on the surface of the base steel sheet 10. Subsequently, measurements are performed three times at each of any three locations on the measurement sample, along both the rolling direction of the base steel sheet 10 and a direction perpendicular to the rolling direction. An average value of the measurement values obtained in this manner can be taken as the surface roughness of the base steel sheet 10.

«Film layer»

Next, the film layer held by the film-laminated steel sheet 1 of this embodiment will be explained in detail.

The film layer in the film-laminated steel sheet 1 of this embodiment is a layer provided on each of the front and rear surfaces of the base steel sheet 10 as schematically illustrated in FIG. 1 and is formed by a thermoplastic polyester film. Note that the term "thermoplastic polyester" above refers to a "thermoplastic polymer compound having ester bonds (-COO-)".

[Melting point of thermoplastic polyester forming film layer]

◇ Can outer surface side film layer 21

As mentioned earlier, when cans are manufactured by continuously DI forming laminated steel sheets, the steel sheet temperature may rise to a maximum of approximately 200°C. When the melting point of the film layer on the can outer surface side is low, the film softens during the iron forming process and becomes prone to abrasion. Therefore, the thermoplastic polyester film forming the film layer of the film-laminated steel sheet 1 on the can outer surface side (can outer surface side film layer 21 in FIG. 1) is preferably a thermoplastic film that does not soften even around 200°C. When the melting point is 215°C or higher, a degree of film softening is reduced even if the steel sheet temperature reaches 200°C, making it possible to suppress the occurrence of film abrasion. From this perspective, in the film-laminated steel sheet 1 of this embodiment, the melting point of the thermoplastic polyester film forming the can outer surface side film layer 21 is preferably 215°C or higher. The melting point of the thermoplastic polyester film forming the can outer surface side film layer 21 is more preferably 216°C or higher, and even more preferably 218°C or higher.

On the other hand, in the film-laminated steel sheet 1, when the melting point of the thermoplastic polyester film forming the can outer surface side film layer 21 exceeds 260°C, deformation resistance of the film is large while a mold temperature is still low immediately after the DI forming begins. This increases a risk of film rupture in areas of high bending strain, such as a punch shoulder portion or a ring-processed portion of a can bottom. The melting point of the thermoplastic polyester film forming the can outer surface side film layer 21 is preferably set to 260°C or lower to prevent such film rupture. Furthermore, as explained below, the melting point of the thermoplastic polyester film forming a can inner surface side film layer 22 is preferably 5°C or more higher than the melting point of the thermoplastic polyester film forming the can outer surface side film layer 21. Considering this difference in melting points, the melting point of the thermoplastic polyester film forming the can outer surface side film layer 21 is preferably less than 255°C. The melting point of the thermoplastic polyester film forming the can outer surface side film layer 21 is more preferably 240°C or lower, and further preferably 235°C or lower.

◇ Can inner surface side film layer 22

Regarding the side of the film-laminated steel sheet 1 that becomes an inner surface of the can, when the steel sheet temperature rises and the film layer softens, the film becomes more prone to adhere to the punch, and the punch-withdrawing performance may be deteriorated. As a result of the punch becoming difficult to withdraw, a can end portion may get stuck with a stopper provided in the die, causing deformation of the can end portion. However, when the degree of film softening is smaller than that of the film layer on the side that becomes the can outer surface, the sliding property on the side that becomes the can inner surface is relatively better than that on the side that becomes the can outer surface when withdrawing the punch. From this perspective, the melting point of the thermoplastic polyester film forming the film layer on the side of the film-laminated steel sheet 1 that becomes the can inner surface (that is, the can inner surface side film layer 22 in FIG. 1) is preferably higher than the melting point of the thermoplastic polyester film forming the can outer surface side film layer 21.

Based on the above concept, the inventors conducted detailed investigations and discovered that excellent punch-withdrawing performance is achieved when the melting point of the thermoplastic polyester film forming the can inner surface side film layer 22 is 5°C or more higher than the melting point of the thermoplastic polyester film forming the can outer surface side film layer 21.

Based on the above findings, in the film-laminated steel sheet 1 of this embodiment, the melting point of the thermoplastic polyester film forming the can outer surface side film layer 21 is preferably 215°C or higher. The melting point of the thermoplastic polyester film forming the can outer surface side film layer 21 is more preferably 218°C or higher, and further preferably 220°C or higher.

On the other hand, in the film-laminated steel sheet 1, when the melting point of the thermoplastic polyester film forming the can inner surface side film layer 22 exceeds 260°C, the deformation resistance of the film is large while the mold temperature is still low immediately after the DI forming begins, similar to the case of the can outer surface side film layer 21. This increases the risk of film rupture in areas of high bending strain, such as the punch shoulder portion or the ring-processed portion of the can bottom. The melting point of the thermoplastic polyester film forming the can inner surface side film layer 22 is preferably set to 260°C or lower to prevent such film rupture. The melting point of the thermoplastic polyester film forming the can inner surface side film layer 22 is more preferably 255°C or lower, and further preferably 250°C or lower.

As described above, for the can inner surface side film layer 22 of this embodiment, it is preferable to use the thermoplastic polyester film having the melting point within the range of 220 to 260°C and 5°C or more higher than the melting point of the thermoplastic polyester film forming the can outer surface side film layer 21. The difference in the melting points between the thermoplastic polyester films on the can inner surface side and can outer surface side is preferably 10°C or more, and more preferably 15°C or more. Although no specific upper limit is prescribed for this difference in the melting points between the thermoplastic polyester films on the can inner surface side and can outer surface side, in practice, approximately 30°C is the upper limit.

To determine whether the polyester film is used as the film layer in the film-laminated steel sheet 1 based on the state of the already manufactured film-laminated steel sheet 1, a sample should be taken from any location on the film layer of the focused film-laminated steel sheet 1, and the obtained sample can then be analyzed, for example, using Fourier transform infrared spectroscopy (FT-IR). When analysis results indicate the presence of ester bonds, it can be determined that the focused film layer is formed by the polyester film. Furthermore, it is possible to determine whether a resin forming the focused film layer is thermoplastic by verifying whether the obtained sample softens when heated.

Furthermore, the melting point of the thermoplastic polyester film described above can be determined by taking a sample of approximately 5 to 10 mg from any location on the film layer of the focused film-laminated steel sheet 1, analyzing the obtained sample using differential scanning calorimetry (DSC) to determine a temperature at which a main endothermic peak occurs in the analysis results. For example, a commercially available differential scanning calorimeter (for example, DSC7030 manufactured by Hitachi High-Tech Science Corporation) may be used. The obtained sample should be sealed in an aluminum pan and measured over a range of 50 to 350°C at a heating rate of 10°C/min.

[Details of thermoplastic polyester film]

In the film-laminated steel sheet 1 of this embodiment, the thermoplastic polyester film used for the film layer is preferably a film in which no leaching of resin components and no adsorption of flavor components into/to food contents, even after undergoing can body forming, baking, and retort treatment.

Furthermore, the thermoplastic polyester film used for the film layer preferably has elongation of 100% or more when tested individually. Having the elongation of 100% or more when tested individually further prevents rupture of the film layer during DI forming of the film-laminated steel sheet 1.

◇ Can outer surface side film layer 21

In the film-laminated steel sheet 1 of this embodiment, the thermoplastic polyester film forming the can outer surface side film layer 21 preferably has the melting point of 215°C or higher as described above, in addition to the aforementioned properties toward the food contents and the film elongation.

Such thermoplastic polyester films include, for example, a polybutylene terephthalate resin, a copolymer resin of butylene terephthalate with ethylene terephthalate and/or ethylene terephthalate isophthalate, a blend resin of the polybutylene terephthalate resin with a polyethylene terephthalate resin and/or a polyethylene isophthalate terephthalate resin, an ethylene terephthalate isophthalate copolymer resin, a blend resin of the polyethylene terephthalate resin with a polyethylene terephthalate isophthalate copolymer resin, and so on.

In particular, in a case of a copolymer resin of butylene terephthalate with ethylene terephthalate and/or polyethylene isophthalate terephthalate, it is particularly desirable that polybutylene terephthalate is contained equivalent to 50 mass% or more. Furthermore, in the case of the blend resin of the polybutylene terephthalate resin with the polyethylene terephthalate resin and/or the polyethylene isophthalate terephthalate resin, it is particularly desirable when the polybutylene terephthalate resin is contained 50 mass% or more, as this results in a resin that is highly stretchable and possesses high fracture strength.

◇ Can inner surface side film layer 22

In the film-laminated steel sheet 1 of this embodiment, the thermoplastic polyester film forming the can inner surface side film layer 22 preferably has the melting point 5°C or more higher than that of the thermoplastic polyester film forming the can outer surface side film layer 21, as described above, in addition to the aforementioned properties toward the food contents and the film elongation.

Such thermoplastic polyester films include, for example, the polyethylene terephthalate resin, the polyethylene terephthalate isophthalate copolymer resin, a polyethylene terephthalate butylene terephthalate copolymer resin, the blend resin of the polyethylene terephthalate resin with the polyethylene terephthalate isophthalate copolymer resin, a blend resin of polyethylene terephthalate with the polybutylene terephthalate resin, a blend resin of the polyethylene terephthalate isophthalate copolymer resin with the polyethylene terephthalate butylene terephthalate copolymer resin, an oriented film or non-oriented film of the blend resin of the above resins, and the like.

In the film-laminated steel sheet 1 of this embodiment, the thermoplastic polyester film used for the film layer may be either an oriented film or a non-oriented film. However, since it is preferable to pay close attention to the film elongation during DI forming, a draw ratio is preferably 3 or less when using the oriented film.

Furthermore, the film used for the film-laminated steel sheet 1 may be a multilayer film formed by two to three layers within the range of satisfying the above characteristics.

In the film-laminated steel sheet 1 of this embodiment, various additives such as pigments, lubricants, antioxidants, heat stabilizers, antistatic agents, and nucleating agents may be added to the thermoplastic polyester film used for the film layer as needed.

The elongation of the thermoplastic polyester film described above can be determined by measuring it in accordance with JIS K7161-1:2014 and JIS K7127:1999. Concretely, after removing the wax layer from the focused film-laminated steel sheet 1 using hexane, a tensile test piece can be taken from any location on the film layer in accordance with the aforementioned standards. The obtained tensile test piece can then be set in a tensile tester, and a tensile test can be conducted at a measurement temperature of 23 to 25°C.

[Thickness of film layer]

◇ Can outer surface side film layer 21

In the focused DI forming in this embodiment, the film layer on the side of the film-laminated steel sheet 1 that becomes the can outer surface (that is, the can outer surface side film layer 21) is subjected to particularly strong shear force during iron forming. Therefore, when the thickness of the can outer surface side film layer 21 is too thin, the film layer surface may become abraded, which may cause the occurrence of pinholes. On the other hand, when the thickness of the can outer surface side film layer 21 is too thick, the film may undergo shear displacement while passing through the ironing die, resulting in surface abrasion of the film layer, which may lead to formation of pressing flaws or streaks caused by the resulting abrasion residue.

According to a detailed examination by the inventors, it was found that when the thickness of the can outer surface side film layer 21 of the film-laminated steel sheet 1 (thickness $d_{F_O}$ in FIG. 1) is 12 $\mu$m or more, the occurrence of pinholes can be more effectively suppressed even when the strong shear force is applied to the film layer surface during DI forming. The thickness of the can outer surface side film layer 21 is more preferably 15 $\mu$m or more.

On the other hand, according to the detailed examination by the inventors, it was found that when the thickness of the can outer surface side film layer 21 of the film-laminated steel sheet 1 is 40 $\mu$m or less, the film layer abrasion can be prevented while passing through the ironing die, thereby more effectively suppressing the formation of the pressing flaws and streaks. The thickness of the can outer surface side film layer 21 is more preferably 35 $\mu$m or less.

◇ Can inner surface side film layer 22

In the film-laminated steel sheet 1 of this embodiment, the thickness of the film layer on the side that becomes the can inner surface (that is, the can inner surface side film layer 22) may be appropriately set to a thickness sufficient to provide adequate retort corrosion resistance according to corrosiveness of can contents. For example, for typical contents such as boiled or oil-preserved foods with a pH value that is not low, the thickness of the can inner surface side film layer 22 (thickness $d_{F_i}$ in FIG. 1) being 10 $\mu$m or more can provide good retort corrosion resistance. Furthermore, since canned contents exhibiting low pH values exhibit strong corrosiveness, the thickness of the can inner surface side film layer 22 is preferably as thick as possible. For example, the thickness of the can inner surface side film layer 22 is set to 20 $\mu$m or more, thereby making it possible to ensure the good retort corrosion resistance even when containing the canned contents exhibiting strong corrosiveness.

However, when the thickness of the can inner surface side film layer 22 exceeds 100 $\mu$m, the film may closely adhere to the punch during DI forming, making it difficult to slide and causing deterioration of the punch-withdrawing performance. Therefore, it is possible to suppress the deterioration of the punch-withdrawing performance while ensuring good retort corrosion resistance by setting the thickness of the can inner surface side film layer 22 at 100 $\mu$m or less. The thickness of the can inner surface side film layer 22 is more preferably 50 $\mu$m or less.

To measure the thickness of the film layer as described above from the state of the already manufactured film-laminated steel sheet 1, proceed as follows. First, a plurality of sample pieces, each with a size of 100 × 100 mm, are taken from any location on the sheet-shaped or coil-shaped film-laminated steel sheet 1. The thickness of the can outer surface side film layer 21 can be measured by first scraping the can inner surface side film layer 22 side of the obtained sample piece with sandpaper or similar. Then, the film-laminated steel sheet 1 is immersed in 17% to 35% hydrochloric acid to dissolve the base steel sheet, thereby peeling off and extracting only the can outer surface side film layer 21. Then, the thickness of the can outer surface side film layer 21 can be measured at any three points using a micrometer while changing the position. An average value of the obtained three measurement values is taken as the thickness of the can outer surface side film layer 21. The thickness of the can inner surface side film layer 22 is measured by scraping the can outer surface side film layer 21 side of the obtained sample piece with sandpaper or similar. Then, the film-laminated steel sheet 1 is immersed in 17% to 35% hydrochloric acid to dissolve the base steel sheet, thereby peeling off and extracting only the can inner surface side film layer 22. Then, the thickness of the can inner surface side film layer 22 is measured at any three points using a micrometer while changing the position. An average value of the obtained three measurement values is taken as the thickness of the can inner surface side film layer 22.

«Wax layer»

Next, the wax layer held by the film-laminated steel sheet 1 of this embodiment will be explained in detail.

The wax layer in the film-laminated steel sheet 1 of this embodiment is a layer provided on the film layer, as schematically illustrated in FIG. 1.

[Coating weight of wax layer]

In the film-laminated steel sheet 1 of this embodiment, a coating weight of the wax layer significantly affects not only the abrasion and galling of the can outer surface side film layer 21 during DI forming but also the punch-withdrawing performance. Therefore, the coating weight of the wax layer becomes a critical factor in maintaining the ironing formability during DI forming while further improving the punch-withdrawing performance.

The wax layers provided on the can inner surface side and can outer surface side of the film-laminated steel sheet 1 melt as the steel sheet temperature rises during DI forming. These form lubricating coating films on the surfaces of the laminated steel sheet (which can also be considered as the surfaces of the film layers in this embodiment), thereby imparting excellent lubricity to the laminated steel sheet. Furthermore, after DI forming is completed, the wax that melted during DI forming may solidify again and remain on the surfaces of the film layers.

In the film-laminated steel sheet 1 of this embodiment, the coating weight of the wax layer is within a range of 0.030 to 0.135 $g/m^2$ per side, and the coating weights of the wax layers differ between the front side and the rear side of the steel sheet. The value of the coating weight of 0.030 $g/m^2$ per side corresponds to a minimum coating weight of the wax layer applied to the side with the lower coating weight, while the value of the coating weight of 0.135 $g/m^2$ per side corresponds to a maximum coating weight of the wax layer applied to the side with the higher coating weight.

Hereinafter, the coating weight of the can outer surface side wax layer 31 and the coating weight of the can inner surface side wax layer 32 are explained in detail.

◇ Can outer surface side wax layer 31

In the film-laminated steel sheet 1 of this embodiment, the coating weight of the can outer surface side wax layer 31 is 0.030 $g/m^2$ or higher. When the coating weight of the can outer surface side wax layer 31 is less than 0.030 $g/m^2$, the wax coating film is prone to break (the lubricating coating film disappears) during the iron forming. This may cause the abrasion or galling of the film layer in the iron forming area on the can outer surface, which is undesirable. By setting the coating weight of the can outer surface side wax layer 31 to 0.030 $g/m^2$ or higher, the disappearance of the lubricating coating film during the iron forming can be prevented, thereby preventing the occurrence of abrasion or galling of the film layer in the iron forming area on the can outer surface. The coating weight of the can outer surface side wax layer 31 is preferably 0.040 $g/m^2$ or higher, and more preferably 0.050 $g/m^2$ or higher.

On the other hand, in the film-laminated steel sheet 1 of this embodiment, the coating weight of the can outer surface side wax layer 31 is even lower than the previously mentioned value of 0.135 $g/m^2$, being 0.100 $g/m^2$ or lower. When the coating weight of the can outer surface side wax layer 31 exceeds 0.100 $g/m^2$, excess wax accumulates in gaps of the ironing die, which causes streaks or pressing flaws on the surface of the film layer in areas where the wax has accumulated thickly, which is undesirable. Limiting the coating weight of the can outer surface side wax layer 31 to 0.100 $g/m^2$ or lower prevents the occurrence of streaks or pressing flaws on the film layer surface. The coating weight of the can outer surface side wax layer 31 is preferably 0.095 $g/m^2$ or lower, and more preferably 0.090 $g/m^2$ or lower.

◇ Can inner surface side wax layer 32

Regarding the coating weight of the can inner surface side wax layer 32 in the film-laminated steel sheet 1 of this embodiment, the inventors obtained the following findings. That is, when the coating weight of the can inner surface side wax layer 32 is too high, it becomes undesirable because the punch becomes more prone to slipping as the punch temperature increases during continuous canmaking. This causes strain to concentrate at a point of the can bottom where the punch shoulder is in contact, leading to fracture, known as the "punch shoulder failure".

On the other hand, when the coating weight of the can inner surface side wax layer 32 is too low, the can body becomes difficult to withdraw from the punch as the punch returns from a bottom dead center to a top dead center. As a result, when the punch retracts, the can body portion retracts along with the punch, making the can end portion prone to deformation as it strongly strikes against a stopper provided on the die side. Furthermore, in some cases, the can body portion may buckle, necessitating interruption of the canmaking process, which is undesirable.

Based on the above findings, the inventors conducted further investigations and concluded that the aforementioned buckling of the can body portion is more likely to occur when the coating weight of the can outer surface side wax layer 31 is lower than the coating weight of the can inner surface side wax layer 32, and that the aforementioned punch shoulder failure is more likely to occur when the coating weight of the can inner surface side wax layer 32 is excessively higher than the coating weight of the can outer surface side wax layer 31.

The inventors further examined this point in detail and found that in the film-laminated steel sheet 1 of this embodiment, by setting the coating weight of the can inner surface side wax layer 32 (that is, the wax layer on the side with the higher coating weight) to be within a range of 1.05 to 1.35 times the coating weight of the can outer surface side wax layer 31 (that is, the wax layer on the side with the lower coating weight), the can body buckling can be suppressed without leading to the punch shoulder failure. Hereinafter, a ratio obtained by dividing the coating weight of the wax layer on the side with the higher coating weight by the coating weight of the wax layer on the side with the lower coating weight shall be referred to as a "coating weight ratio".

Based on the above, in the film-laminated steel sheet 1 of this embodiment, the coating weight of the can outer surface side wax layer 31 is set within the range of 0.030 to 0.100 $g/m^2$, and the coating weight of the can inner surface side wax layer 32 is set within the range of 1.05 to 1.35 times the coating weight of the can outer surface side wax layer 31 (in other words, the coating weight ratio specified as above is set within the range of 1.05 to 1.35). This enables the film-laminated steel sheet 1 of this embodiment to maintain its ironing formability during DI forming while further improving its punch-withdrawing performance. As a result, it allows for further improvement in continuous canmaking performance during manufacturing of DI cans.

The coating weight of the can inner surface side wax layer 32 is preferably 1.10 times or more the coating weight of the can outer surface side wax layer 31, and more preferably 1.15 times or more the coating weight of the can outer surface side wax layer 31. Furthermore, the coating weight of the can inner surface side wax layer 32 is preferably 1.30 times or less the coating weight of the can outer surface side wax layer 31, and more preferably 1.25 times or less the coating weight of the can outer surface side wax layer 31.

To measure the coating weight of the wax layer as described above from the state of the already manufactured film-laminated steel sheet, dissolve the wax layer on the focused side in a predetermined solvent, and then perform the following processes.

First, a plurality of sample pieces, for example, each 200 mm × 200 mm in size, are taken from any location on the sheet-shaped or coil-shaped film-laminated steel sheet 1. Then, the surface of the wax layer on the side not focused is tape-sealed to prevent wax from leaching out of the wax layer on the side not focused. Next, a solvent capable of dissolving wax (for example, n-heptane or the like) is applied to the surface on the side that is not tape-sealed, allowing it to flow over the surface to dissolve the wax layer. The applied solvent is recovered using an aluminum foil case (for example, a foil case S736210, manufactured by Toyo Aluminum Ekco Products Co., Ltd., deep type, 11 μm thick, mass: approx. 0.38g) whose mass was previously measured using a precision balance.

Next, the aluminum foil case containing the solvent with dissolved wax is put into a thermostatic bath at 100°C for 30 minutes to completely evaporate the solvent. Afterwards, the mass of the aluminum foil case after the solvent evaporation is measured using a precision balance. The mass of the wax can be calculated by subtracting the mass of the aluminum foil case before solvent recovery from the mass obtained in this way. The coating weight of the wax layer on the focused side can be determined by dividing the wax mass obtained in this manner by an area of the sample (unit is converted to $m^2$).

In the film-laminated steel sheet 1 of this embodiment, the coating weight of the wax layer may be within a range of higher than 0.120 $g/m^2$ and 0.135 $g/m^2$ or lower per side. Even in a high-coating-weight state where the coating weight of the wax layer per side exceeds 0.120 $g/m^2$, the film-laminated steel sheet 1 of this embodiment can maintain its ironing formability during DI forming while further improving its punch-withdrawing performance. The coating weight of 0.120 $g/m^2$ per side corresponds to a minimum value of the coating weight of the wax layer on the side with the lower coating weight, while the coating weight of 0.135 $g/m^2$ per side corresponds to a maximum value of the coating weight of the wax layer on the side with the higher coating weight.

[Penetration of wax]

Next, it is more preferable for the wax to possess a certain degree of hardness to further prevent the abrasion of the can outer surface side film layer 21 that may occur during DI forming, as mentioned earlier. Here, the hardness of the wax can be expressed by penetration specified in JIS K2235:2022-Section 6.4.

When the penetration of the wax forming the wax layer of this embodiment is too low, especially during an initial forming stage when the mold temperature has not fully risen, the wax is in a hard state. Therefore, the wax tends to fall off easily at the iron forming area, and the resulting wax residue often causes pressing flaws. However, using wax with the penetration of 5 or higher at a test temperature of 25°C can prevent such wax from falling off during the initial forming stage. Therefore, the wax forming the wax layer preferably has the penetration of 5 or higher at the test temperature of 25°C in the wax layer of this embodiment. The wax more preferably has the penetration of 10 or higher at the test temperature of 25°C.

On the other hand, when the penetration of the wax forming the wax layer of this embodiment is too high, it means that the wax has low viscosity. In this case, as continuous canmaking is conducted and the mold temperature rises, the lubricity of wax decreases, making it easier to occur the film layer abrasion or galling. However, using wax with the penetration of 20 or lower at the test temperature of 25°C can prevent the occurrence of the film layer abrasion and galling caused by the wax viscosity. Therefore, in the wax layer of this embodiment, the penetration of the wax forming the wax layer at the test temperature of 25°C is preferably 20 or lower. The penetration of the wax at the test temperature of 25°C is more preferably 15 or lower.

The wax penetration described above can be measured in accordance with JIS K2235:2022.

[Melting point of wax]

In the can outer surface side wax layer 31 of this embodiment, when the melting point of wax forming the wax layer is too low, melted wax tends to drip onto the outer surface of the can wall during DI forming, making wax contamination more prone to occur, which is undesirable. Furthermore, in the can inner surface side wax layer 32, when the melting point of wax forming the wax layer is too low, it becomes difficult to obtain proper lubricity during DI forming, making it easier to occur the film layer abrasion. However, by setting the melting point of wax forming the wax layer to 50.0°C or higher, the pressing flaws and wax contamination on the can outer surface side, as well as the film layer abrasion on the can inner surface side, can be further prevented. In the wax layer of this embodiment, the melting point of the wax forming the wax layer is more preferably 52.0°C or higher.

On the other hand, in the can outer surface side wax layer 31 of this embodiment, when the melting point of wax forming the wax layer is too high, the wax tends to adhere and fall out around the ironing die, making it prone to causing pressing flaws on the can outer surface side, which is undesirable. Similarly, in the can inner surface side wax layer 32, when the melting point of wax forming the wax layer is too high, it becomes difficult to obtain proper lubricity during DI forming, making it easier to occur the film layer abrasion. However, by setting the melting point of wax forming the wax layer be 70.0°C or lower, it becomes possible to further prevent the pressing flaws on the can outer surface side and the abrasion of the film layer on the can inner surface side. In the wax layer of this embodiment, the melting point of wax forming the wax layer is more preferably 68.0°C or lower.

Furthermore, the melting point of wax forming the wax layer described above can be measured by the differential scanning calorimetry, similar to the melting point of the thermoplastic polyester forming the film layer described earlier.

[Concrete examples of wax]

The wax used for the wax layer of this embodiment is preferably selected considering not only the above aspects but also its removability after the canmaking. Examples of waxes with good wax removability after the canmaking include, for example, n-paraffin waxes and their urea adducts (for example, various paraffin waxes, candelilla waxes, carnauba waxes, and so on) with carbon numbers in a range of 24 to 32, micro waxes, mixtures of paraffin wax and micro wax, and other waxes.

In the wax layer of this embodiment, considering the wax removability after canmaking as described above, wax having appropriate penetration and melting point is more preferably selected from among the waxes illustrated in the concrete examples above.

Hereinabove, details regarding the film-laminated steel sheet 1 of this embodiment have been explained with reference to FIG. 1.

(Method for manufacturing film-laminated steel sheet)

Next, an example of a method for manufacturing the film-laminated steel sheet 1 of this embodiment will be described.

<Preparation of base steel sheet>

First, a steel sheet that serves as a base material of the film-laminated steel sheet 1 is prepared. Here, the method for manufacturing the base steel sheet is not limited and can be manufactured using various known methods. Furthermore, during a surface temper rolling process for manufacturing the base steel sheet, desired surface roughness on a surface of the steel sheet can be achieved by adjusting the surface roughness of reduction rolls used. In addition, commercially available steel sheets possessing desired characteristics may be purchased and used as the base steel sheet.

<Formation of film layer>

Next, various kinds of pretreatment, such as alkaline degreasing, water washing, and acid pickling, are applied to the base steel sheet obtained in this manner as necessary to achieve a clean steel sheet surface. Subsequently, a film layer is formed on each of front and rear surfaces of the base steel sheet using a thermoplastic polyester film.

The thermoplastic polyester film used to form the film layer may be manufactured in-house based on various known manufacturing methods to possess desired properties, purchased commercially with desired properties, or purchased commercially available thermoplastic polyester film and then subjected to various known processing methods to achieve the desired properties.

Next, regarding the method for forming the film layers on the front and rear surfaces of the base steel sheet as described above, various known film formation methods can be applied.

However, it is more preferable to use a method where a steel strip is heated by passing it through a jacket roll with an internal heater, an induction heating (IH) furnace, or the like, and then a film is continuously fed from both surfaces of the steel strip and fused onto the steel strip by applying pressure with a heat-resistant rubber roll (thermal fusion method). Using the thermal fusion method enables formation of a film layer with a more uniform thickness on each of the front and rear surfaces of the base steel sheet. In this process, the thickness of the film layer and its surface roughness can be controlled within a desired range by controlling a heating temperature of the base steel sheet, surface roughness of a film-laminating roll, a roll surface temperature, and the applied pressing force.

Concretely, it is preferable to heat the base steel sheet to (the melting point of the film + 15°C) or higher, and to set the surface temperature of the film-laminating roll to a temperature within a range of a glass transition point (Tg) of the film or higher and (the melting point of the film + 30°C) or lower, and (the glass transition point (Tg) of the film +20°C or lower).

Furthermore, it is preferable to control surface hardness of the film-laminating roll within a range of 30 to 80° as measured by a durometer type A specified in JIS K6253-3:2012 to optimize nip time of the film-laminating roll. Furthermore it is preferable to set a nip pressure of the film-laminating roll within a range of 100 to 300 N/cm$^2$ from a perspective of minimizing air bubble inclusion during film formation.

Additionally, the steel sheet after the formation of the film layer is preferably rapidly cooled in a water-cooling tank within one second after lamination to suppress spherulitic crystallization, which causes film embrittlement.

<Formation of wax layer>

Next, the wax layer is formed on the steel sheet where the film layer is formed.

The method for forming the wax layer is not limited. The wax layer may be formed by coating wax that has been heated to a temperature above its melting point and is in a liquid state on the surface of the film layer, or a wax solution may be prepared by dissolving wax in a volatile solvent, and this wax solution may be coated on the surface of the film layer. Furthermore, the steel sheet after the wax coating may be dried by heating or allowed to dry naturally.

The method for coating wax (or the wax solution) on the surface of the film layer is not limited, but may be performed using generally known coating methods, such as roll coating, curtain flow coating, immersion coating, or bar coating. Furthermore, when drying the wax by heating, the heating method is not limited, and any method may be used, such as hot air, near-infrared, far-infrared, induction heating, or a combination of these heating methods, for example.

Among the various film-formation methods of the wax layer described above, the most straightforward approach to ensure productivity is to use a continuous production line for manufacturing film-laminated steel sheets. This involves heating wax to above its melting point to liquefy it, coating it on the surface of the film layer using a roll coater, and then air-cooling it before the steel sheet is coiled.

(Method for manufacturing DI cans using film-laminated steel sheets)

The film-laminated steel sheet 1 of this embodiment can be subjected to drawn and ironing forming using a commercially available cupping press and DI forming apparatus. More specifically, the film-laminated steel sheet described above can be used as the material for the DI can. The film-laminated steel sheet should be arranged such that the surface with the lower coating weight of the wax layer becomes the outer surface of the DI can, and the surface with the higher coating weight of the wax layer becomes the inner surface of the DI can. Subsequently, this film-laminated steel sheet is subjected to the DI forming. Note that the specific conditions for the DI forming are not prescribed; the DI forming is performed on the film-laminated steel sheet under general DI forming conditions.

In the film-laminated steel sheet 1 of this embodiment, the wax layer is provided on the film layer in advance. Furthermore, while ensuring both ironing formability and punch-withdrawing performance during DI forming, the punch-withdrawing performance is further improved. As a result, sufficient forming is possible during DI forming even without coolant. Furthermore, when the film-laminated steel sheet 1 of this embodiment is subjected to DI forming, a coolant conventionally used in DI forming may also be used. Here, various conditions during DI forming are not limited.

When manufacturing paper-wrapped packaging cans, a DI can can be obtained by trimming a can end portion of the DI-formed can body to a desired shape and then performing flange-up processing. Furthermore, when printing on the can body, the can end portion of the DI-formed can body is trimmed into a desired shape. Subsequently, after printing the can body using a curved surface printing machine with either letterpress offset printing or flat plate offset printing, followed by baking, flange-up processing of the can end portion produces a DI can. After filling the manufactured DI can with contents, sealing the DI can is achieved by end seaming.

EXAMPLES

The following concretely describes the film-laminated steel sheets and the method for manufacturing DI cans of this embodiment, with examples. However, the conditions in the examples below are merely one example used to verify the feasibility and effects of the present invention, and the present invention is not limited to the examples described below. Within the scope of the present invention and without departing from its essence, it is possible to implement the invention by making appropriate modifications consistent with its purpose. Therefore, the present invention may adopt various conditions, all of which are included within the technical features of the invention.

<Base steel sheet>

Steel sheets M1 to M8, shown in Table 1 below, were used as base steel sheets. Here, one surface of the base steel sheet is designated as a "first surface", and the surface opposite the first surface is designated as a "second surface". In each operation performed below, the base steel sheet was handled such that the first surface side became a side with a lower coating weight of the wax layer, and the second surface side became a side with a higher coating weight of the wax layer.

M1 to M6 were tin-free steel sheets (manufactured by Nippon Steel Corporation) having a chromium metal layer (coating weight: 80 $mg/m^2$ per side) and a chromium hydrated oxide layer (coating weight: 10 $mg/m^2$ per side) on a surface of a steel sheet with a thickness of 0.225 mm, temper grade = T3, r-value = 1.05 to 1.1, and $\Delta r$ = 0.00 to 0.40. Surface roughness of each of M1 to M8 is different, as illustrated in Table 1.

M7 is a tin-plated steel sheet using a steel sheet with a thickness of 0.24 mm, temper grade = T3, r-value = 1.10, and $\Delta r$ = 0.15. M7 is a so-called tinplate steel sheet (manufactured by Nippon Steel Corporation) having a Sn-Fe alloy layer (Sn content: 1.3 $g/m^2$ per side), a pure Sn layer (Sn content: 1.5 $g/m^2$ per side), and a chromium hydrated oxide layer (coating weight: 10 $mg/m^2$ per side) from the steel sheet side.

M8 is a chromate-free steel sheet (manufactured by Nippon Steel Corporation) having a chromate-free chemical treatment film primarily composed of Zr hydroxide (Zr content: 60 $mg/m^2$ per side) applied to a cold-rolled steel sheet with a thickness of 0.195 mm, temper grade = T3, r-value = 1.00, and $\Delta r$ = 0.45.

A sample with a size of 200 mm × 200 mm was cut out from each base steel sheet. An arithmetic mean roughness Ra was measured three times at each of three points along a diagonal line of the sample, for both a coil longitudinal direction and a coil width direction, at a sweep rate of 0.3 mm/sec using SURFCOM 570A, surface roughness and contour measuring instrument manufactured by Tokyo Seiki Co., Ltd. An average value of the obtained measurement values was taken as the surface roughness Ra for each base steel sheet. The results obtained are illustrated in Table 1.

[Table 1]

TABLE 1

| SYMBOL | BASE STEEL SHEET | | | SURFACE ROUGHNESS Ra (μm) | | MECHANICAL PROPERTIES | |
|---|---|---|---|---|---|---|---|
| | STEEL SHEET TYPE | THICKNESS (mm) | PLATING TYPE, PLATING AMOUNT (SAME ON FRONT AND REAR SURFACE) | FIRST SURFACE SIDE | SECOND SURFACE SIDE | r-VALUE | $\Delta r$ (ABSOLUTE VALUE) |
| M1 | TEMPER GRADE T3 | 0.225 | METAL Cr 80 ($mg/m^2$) + CHROMIUM HYDRATED OXIDE 10 ($mg/m^2$) | 0.08 | 0.08 | 1.05 | 0.40 |

(continued)

| SYMBOL | BASE STEEL SHEET | | | SURFACE ROUGHNESS Ra ($\mu$m) | | MECHANICAL PROPERTIES | |
|---|---|---|---|---|---|---|---|
| | STEEL SHEET TYPE | THICKNESS (mm) | PLATING TYPE, PLATING AMOUNT (SAME ON FRONT AND REAR SURFACE) | FIRST SURFACE SIDE | SECOND SURFACE SIDE | r-VALUE | $\Delta r$ (ABSOLUTE VALUE) |
| M2 | TEMPER GRADE T3 | 0.225 | METAL Cr 80 ($mg/m^2$) + CHROMIUM HYDRATED OXIDE 10 ($mg/m^2$) | 0.10 | 0.10 | 1.05 | 0.20 |
| M3 | TEMPER GRADE T3 | 0.225 | METAL Cr 80 ($mg/m^2$) + CHROMIUM HYDRATED OXIDE 10 ($mg/m^2$) | 0.20 | 0.20 | 1.05 | 0.00 |
| M4 | TEMPER GRADE T3 | 0.225 | METAL Cr 80 ($mg/m^2$) + CHROMIUM HYDRATED OXIDE 10 ($mg/m^2$) | 0.40 | 0.40 | 1.05 | 0.33 |
| M5 | TEMPER GRADE T3 | 0.225 | METAL Cr 80 ($mg/m^2$) + CHROMIUM HYDRATED OXIDE 10 ($mg/m^2$) | 0.50 | 0.50 | 1.05 | 0.25 |
| M6 | TEMPER GRADE T3 | 0.225 | METAL Cr 80 ($mg/m^2$) + CHROMIUM HYDRATED OXIDE 10 ($mg/m^2$) | 0.80 | 0.80 | 1.05 | 0.12 |
| M7 | TEMPER GRADE T3 | 0.240 | METAL Sn 2.8 ($mg/m^2$) + CHROMIUM HYDRATED OXIDE 10 ($mg/m^2$) | 0.30 | 0.30 | 1.10 | 0.15 |
| M8 | TEMPER GRADE T3 | 0.195 | Zr HYDRATED OXIDE 60 ($mg/m^2$) | 0.30 | 0.30 | 1.00 | 0.45 |

<Resin film>

Resin films used for forming film layers of the film-laminated steel sheet are illustrated in Table 2 below. All films used were commercially available thermoplastic polyester-based oriented films.

F1 is a biaxially oriented film of an ethylene dimethyl terephthalate-ethylene dodecanedioic acid (DMT/DDA-EG) copolymer resin with a melting point of 210°C, thickness of 25 $\mu$m, and elongation of 200%.

F2 is a biaxially oriented film of an ethylene terephthalate-butylene terephthalate (PET-PBT) copolymer resin with a melting point of 213°C, thickness of 25 $\mu$m, and elongation of 190%.

F3 is a biaxially oriented film of the ethylene terephthalate-butylene terephthalate (PET-PBT) copolymer resin with a melting point of 215°C, thickness of 25 $\mu$m, and elongation of 190%.

F4 is a biaxially oriented film of the ethylene terephthalate-butylene terephthalate (PET-PBT) copolymer resin with a melting point of 218°C, thickness of 12 $\mu$m, and elongation of 190%.

F5 is a biaxially oriented film of an ethylene terephthalate-ethylene isophthalate (PET-IA) copolymer resin with a melting point of 227°C, thickness of 19 $\mu$m, and elongation of 160%.

F6 is a biaxially oriented film of the ethylene terephthalate-ethylene isophthalate (PET-IA) copolymer resin with a melting point of 227°C, thickness of 40 $\mu$m, and elongation of 180%.

F7 is a biaxially oriented film of the ethylene terephthalate-ethylene isophthalate (PET-IA) copolymer resin with a melting point of 240°C, thickness of 30 $\mu$m, and elongation of 130%.

F8 is a biaxially oriented film of a polyethylene terephthalate (PET) resin with a melting point of 242°C, thickness of 20 $\mu$m, draw ratio of 2.9, and elongation of 100%.

F9 is a biaxially oriented film of the polyethylene terephthalate (PET) resin with a melting point of 253°C, thickness of 20 $\mu$m, draw ratio of 3.0, and elongation of 100%.

F10 is a biaxially oriented film of the polyethylene terephthalate (PET) resin with a melting point of 258°C, thickness of 19 $\mu$m, draw ratio of 3.1, and elongation of 100%.

F11 is a biaxially oriented film of the polyethylene terephthalate (PET) resin with a melting point of 262°C, thickness of 19 $\mu$m, draw ratio of 3.3, and elongation of 100%.

F12 is a biaxially oriented film of the ethylene terephthalate-butylene terephthalate (PET-PBT) copolymer resin with a melting point of 212°C, thickness of 10 $\mu$m, and elongation of 190%.

F13 is a biaxially oriented film of the ethylene terephthalate-ethylene isophthalate (PET-IA) copolymer resin with a melting point of 227°C, thickness of 42 $\mu$m, and elongation of 200%.

F14 is a biaxially oriented film of the ethylene terephthalate-ethylene isophthalate (PET-IA) copolymer resin with a melting point of 227°C, thickness of 50 $\mu$m, and elongation of 200%.

F15 is a biaxially oriented film of the ethylene terephthalate-ethylene isophthalate (PET-IA) copolymer resin with a melting point of 227°C, thickness of 100 $\mu$m, and elongation of 200%.

A sample of 5 to 8 mg was taken from each of the above resin films and sealed in an aluminum pan. Measurements were performed over a range of 50 to 350°C at a heating rate of 10°C/min using a differential scanning calorimeter (DSC7030 manufactured by Hitachi High-Tech Science Corporation). A temperature of a main endothermic peak was taken as the melting point for each resin film.

[Table 2]

TABLE 2

| SYMBOL | FILM CONTENT | MELTING POINT (°C) | THICKNESS ($\mu$m) | ELONGATION (%) |
|---|---|---|---|---|
| F1 | THERMOPLASTIC ORIENTED DMT/DDA-EG FILM | 210 | 25 | 200 |
| F2 | THERMOPLASTIC ORIENTED PET-PBT FILM | 213 | 25 | 190 |
| F3 | THERMOPLASTIC ORIENTED PET-PBT FILM | 215 | 25 | 190 |
| F4 | THERMOPLASTIC ORIENTED PET-PBT FILM | 218 | 12 | 190 |

(continued)

| SYMBOL | FILM CONTENT | MELTING POINT (°C) | THICKNESS (μm) | ELONGATION (%) |
|---|---|---|---|---|
| F5 | THERMOPLASTIC ORIENTED PET-IA FILM | 227 | 19 | 160 |
| F6 | THERMOPLASTIC ORIENTED PET-IA FILM | 227 | 40 | 180 |
| F7 | THERMOPLASTIC ORIENTED PET-IA FILM | 240 | 30 | 130 |
| F8 | THERMOPLASTIC ORIENTED PET FILM (DRAW RATIO 2.9) | 242 | 20 | 100 |
| F9 | THERMOPLASTIC ORIENTED PET FILM (DRAW RATIO 3.0) | 253 | 20 | 100 |
| F10 | THERMOPLASTIC ORIENTED PET FILM (DRAW RATIO 3.1) | 258 | 19 | 100 |
| F11 | THERMOPLASTIC ORIENTED PET FILM (DRAW RATIO 3.3) | 262 | 19 | 100 |
| F12 | THERMOPLASTIC ORIENTED PET-PBT FILM | 218 | 10 | 190 |
| F13 | THERMOPLASTIC ORIENTED PET-IA FILM | 227 | 42 | 200 |
| F14 | THERMOPLASTIC ORIENTED PET-IA FILM | 227 | 50 | 200 |
| F15 | THERMOPLASTIC ORIENTED PET-IA FILM | 227 | 100 | 220 |

<Formation of film layer>

Film layers were formed on the front and rear surfaces of the base steel sheet using the base steel sheets and resin films described above. A dedicated resin film laminating apparatus having a metal plate feeding device, a metal hot press for heating the metal plate, a film feeding device for the front and rear surfaces, heat-resistant rubber laminating rolls (with rubber roll surface temperature controlled by metal heating backup rolls), and a cooling water tank was used for film layer formation. Using this apparatus, a plurality of steel sheets with film layers (200 mm in plate width × 200 mm in plate length) were produced at the respective levels shown in Tables 4-1 and 4-2 below.

<Wax>

The waxes used for forming the wax layers on the film-laminated steel sheets were shown in Table 3 below. All waxes listed below are commercially available.
W1 is a paraffin wax with penetration of 29 at 25°C and a melting point of 48.0°C.
W2 is a paraffin wax with penetration of 22 at 25°C and a melting point of 50.0°C.
W3 is a paraffin wax with penetration of 20 at 25°C and a melting point of 50.0°C.
W4 is a paraffin wax with penetration of 15 at 25°C and a melting point of 52.0°C.
W5 is a paraffin wax with penetration of 13 at 25°C and a melting point of 66.3°C.
W6 is a paraffin wax with penetration of 11 at 25°C and a melting point of 69.4°C.
W7 is a paraffin wax with penetration of 5 at 25°C and a melting point of 75.0°C.
W8 is a candellila wax with penetration of 1 at 25°C and a melting point of 65.0°C.
W9 is a carnauba wax with penetration of 1 at 25°C and a melting point of 82.0°C.
The penetration at 25°C for each wax listed above was measured using an automatic penetration measurement device EX-210ED manufactured by Daiichi Rikagaku Co., Ltd. Furthermore, the melting point of each wax above was measured using samples of 5 to 8 mg taken from each wax, employing the same method as for the resin film, using the differential scanning calorimeter (DSC7030 manufactured by Hitachi High-Tech Science Corporation). Measurement conditions were a heating rate of 10°C/min and a measurement temperature range of 50 to 350°C. The temperature of the main endothermic peak was taken as the melting point for each wax.

[Table 3]

TABLE 3

| SYMBOL | WAX TYPE | PENETRATION | MELTING POINT (°C) |
|--------|----------|-------------|--------------------|
| W1 | PARAFFIN WAX | 29 | 48.0 |
| W2 | | 22 | 50.0 |
| W3 | | 20 | 50.0 |
| W4 | | 15 | 52.0 |
| W5 | | 13 | 66.3 |
| W6 | | 11 | 69.4 |
| W7 | | 5 | 75.0 |
| W8 | CANDELILLA WAX | 1 | 65.0 |
| W9 | CARNAUBA WAX | 1 | 82.0 |

<Formation of wax layer>

First, two laminated steel sheets (with the same level), each with a size of 200 mm $\times$ 200 mm, in which the film layers were formed using the aforementioned method, were treated as a single set. The same film surfaces were aligned together, and end faces were tape-sealed.

For each wax shown in Table 3 above, hexane (commercially available general reagent) was used as a solvent. A predetermined amount of each wax was dissolved in the hexane to prepare a wax-hexane solution. A plurality of types of such wax-hexane solutions were prepared for each wax, varying a wax concentration.

The tape-sealed steel sheets as described above were immersed in the wax-hexane solution and then allowed to dry naturally.

Next, the tape seal was removed, the opposite surfaces were aligned, and the tape seal was reapplied. Subsequently, the steel sheets were immersed in the wax-hexane solutions with different concentrations and allowed to dry naturally. Afterwards, the tape seal was removed to prepare film-laminated steel sheets with different wax coating weights between the front and rear surfaces. By repeating this procedure, a plurality of film-laminated steel sheets were prepared for each level shown in Tables 4-1 and 4-2 below. Note that in Tables 4-1 and 4-2 below, the wax used on the front and rear surfaces was at the same level.

<Measurement of wax layer coating weight>

The coating weight of the wax layer was measured as follows.

First, a commercially available tape that does not dissolve in heptane was applied as a tape seal to the side where the coating weight was not measured for the film-laminated steel sheet in each level (with a size of 200 mm $\times$ 200 mm). When applying the tape seal, it was prepared to cover the surface where the coating weight was not measured and the side surface. Furthermore, on the surface where the coating weight was measured, the tape seal was prepared to cover an area extending 5 mm from each end in both width and length directions. With this tape seal, a size of the area on the surface where the coating weight was measured that was not covered by the tape seal was 190 mm $\times$ 190 mm.

Next, heptane (commercially available general reagent) was flowed onto the surface, where the coating weight was measured to dissolve the wax for each level of film-laminated steel sheet with the aforementioned tape seal applied. The flowed heptane was recovered using an aluminum foil case (Foil case S736210 manufactured by Toyo Aluminum Ekco Products Co., Ltd., deep type, 11 $\mu$m thick, mass: approx. 0.38g) whose mass had been previously measured using a precision balance.

Next, the aluminum foil case containing the heptane with dissolved wax was placed in a constant-temperature bath at 100°C for 30 minutes to completely volatilize the heptane. Subsequently, the mass of the aluminum foil case was measured using the precision balance. The mass of the wax was calculated from the difference in masses of the aluminum foil case before and after heptane recovery. The obtained mass of the wax was divided by the wax coating area (190 mm × 190 mm, excluding the tape-sealed portion) to determine the wax coating weight.

The configuration of each film-laminated steel sheet prepared as described above was shown in Tables 4-1 and 4-2 below.

TABLE 4-1

| TEST No. | CONFIGURATION | | | | FIRST SURFACE SIDE | | | | | | SECOND SURFACE SIDE | | | | | | | COATING WEIGHT RATIO | REMARKS |
|---|---|---|---|---|---|---|---|---|---|---|---|---|---|---|---|---|---|---|---|
| | BASE STEEL SHEET | FIRST SURFACE SIDE FILM | SECOND SURFACE SIDE FILM | WAX | BASE STEEL SHEET | FILM LAYER | | | WAX LAYER | | BASE STEEL SHEET | | FILM LAYER | | WAX LAYER | | | | |
| | | | | | SURFACE ROUGHNESS Ra (µm) | MELTING POINT (°C) | THICKNESS (µm) | MELTING POINT (°C) | PENETRATION | COATING WEIGHT (g/m²) | SURFACE ROUGHNESS Ra (µm) | MELTING POINT (°C) | MELTING POINT DIFFERENCE (°C) | THICKNESS (µm) | MELTING POINT (°C) | PENETRATION | COATING WEIGHT (g/m²) | | |
| 1 | M2 | F3 | F5 | W3 | 0.10 | 215 | 25 | 50.0 | 20 | 0.020 | 0.10 | 227 | 12 | 19 | 50.0 | 20 | 0.030 | 1.50 | COMPARATIVE EXAMPLE |
| 2 | M2 | F3 | F5 | W3 | 0.10 | 215 | 25 | 50.0 | 20 | 0.030 | 0.10 | 227 | 12 | 19 | 50.0 | 20 | 0.030 | 1.00 | COMPARATIVE EXAMPLE |
| 3 | M2 | F3 | F5 | W3 | 0.10 | 215 | 25 | 50.0 | 20 | 0.030 | 0.10 | 227 | 12 | 19 | 50.0 | 20 | 0.040 | 1.33 | EXAMPLE |
| 4 | M2 | F3 | F5 | W3 | 0.10 | 215 | 25 | 50.0 | 20 | 0.030 | 0.10 | 227 | 12 | 19 | 50.0 | 20 | 0.050 | 1.67 | COMPARATIVE EXAMPLE |
| 5 | M2 | F3 | F5 | W3 | 0.10 | 215 | 25 | 50.0 | 20 | 0.050 | 0.10 | 227 | 12 | 19 | 50.0 | 20 | 0.050 | 1.00 | COMPARATIVE EXAMPLE |
| 6 | M2 | F3 | F5 | W3 | 0.10 | 215 | 25 | 50.0 | 20 | 0.050 | 0.10 | 227 | 12 | 19 | 50.0 | 20 | 0.060 | 1.20 | EXAMPLE |
| 7 | M2 | F3 | F5 | W3 | 0.10 | 215 | 25 | 50.0 | 20 | 0.050 | 0.10 | 227 | 12 | 19 | 50.0 | 20 | 0.067 | 1.34 | EXAMPLE |
| 8 | M2 | F3 | F5 | W3 | 0.10 | 215 | 25 | 50.0 | 20 | 0.050 | 0.10 | 227 | 12 | 19 | 50.0 | 20 | 0.070 | 1.40 | COMPARATIVE EXAMPLE |
| 9 | M2 | F3 | F5 | W3 | 0.10 | 215 | 25 | 50.0 | 20 | 0.100 | 0.10 | 227 | 12 | 19 | 50.0 | 20 | 0.100 | 1.00 | COMPARATIVE EXAMPLE |
| 10 | M2 | F3 | F5 | W3 | 0.10 | 215 | 25 | 50.0 | 20 | 0.100 | 0.10 | 227 | 12 | 19 | 50.0 | 20 | 0.105 | 1.05 | EXAMPLE |
| 11 | M2 | F3 | F5 | W3 | 0.10 | 215 | 25 | 50.0 | 20 | 0.100 | 0.10 | 227 | 12 | 19 | 50.0 | 20 | 0.120 | 1.20 | EXAMPLE |
| 12 | M2 | F3 | F5 | W3 | 0.10 | 215 | 25 | 50.0 | 20 | 0.100 | 0.10 | 227 | 12 | 19 | 50.0 | 20 | 0.135 | 1.35 | EXAMPLE |

| TEST No. | CONFIGURATION | | | | FIRST SURFACE SIDE | | | | | | SECOND SURFACE SIDE | | | | | | | COATING WEIGHT RATIO | REMARKS |
|---|---|---|---|---|---|---|---|---|---|---|---|---|---|---|---|---|---|---|---|
| | BASE STEEL SHEET | FIRST SURFACE SIDE FILM | SECOND SURFACE SIDE FILM | WAX | BASE STEEL SHEET | FILM LAYER | | | WAX LAYER | | BASE STEEL SHEET | | FILM LAYER | | WAX LAYER | | | | |
| | | | | | SURFACE ROUGHNESS Ra (μm) | MELTING POINT (°C) | THICKNESS (μm) | MELTING POINT (°C) | PENETRATION | COATING WEIGHT (g/m²) | SURFACE ROUGHNESS Ra (μm) | MELTING POINT (°C) | MELTING POINT DIFFERENCE (°C) | THICKNESS (μm) | MELTING POINT (°C) | PENETRATION | COATING WEIGHT (g/m²) | | |
| 13 | M2 | F3 | F5 | W3 | 0.10 | 215 | 25 | 50.0 | 20 | 0.100 | 0.10 | 227 | 12 | 19 | 50.0 | 20 | 0.140 | 1.40 | COMPARATIVE EXAMPLE |
| 14 | M2 | F3 | F5 | W3 | 0.10 | 215 | 25 | 50.0 | 20 | 0.110 | 0.10 | 227 | 12 | 19 | 50.0 | 20 | 0.120 | 1.09 | COMPARATIVE EXAMPLE |
| 15 | M2 | F3 | F5 | W4 | 0.10 | 215 | 25 | 52.0 | 15 | 0.020 | 0.10 | 227 | 12 | 19 | 52.0 | 15 | 0.025 | 1.25 | COMPARATIVE EXAMPLE |
| 16 | M2 | F3 | F5 | W4 | 0.10 | 215 | 25 | 52.0 | 15 | 0.030 | 0.10 | 227 | 12 | 19 | 52.0 | 15 | 0.040 | 1.33 | EXAMPLE |
| 17 | M2 | F3 | F5 | W4 | 0.10 | 215 | 25 | 52.0 | 15 | 0.050 | 0.10 | 227 | 12 | 19 | 52.0 | 15 | 0.060 | 1.20 | EXAMPLE |
| 18 | M2 | F3 | F5 | W4 | 0.10 | 215 | 25 | 52.0 | 15 | 0.080 | 0.10 | 227 | 12 | 19 | 52.0 | 15 | 0.080 | 1.00 | COMPARATIVE EXAMPLE |
| 19 | M2 | F3 | F5 | W4 | 0.10 | 215 | 25 | 52.0 | 15 | 0.100 | 0.10 | 227 | 12 | 19 | 52.0 | 15 | 0.135 | 1.35 | EXAMPLE |
| 20 | M2 | F3 | F5 | W4 | 0.10 | 215 | 25 | 52.0 | 15 | 0.110 | 0.10 | 227 | 12 | 19 | 52.0 | 15 | 0.140 | 1.27 | COMPARATIVE EXAMPLE |
| 21 | M2 | F3 | F5 | W5 | 0.10 | 215 | 25 | 66.3 | 13 | 0.020 | 0.10 | 227 | 12 | 19 | 66.3 | 13 | 0.030 | 1.50 | COMPARATIVE EXAMPLE |
| 22 | M2 | F3 | F5 | W5 | 0.10 | 215 | 25 | 66.3 | 13 | 0.030 | 0.10 | 227 | 12 | 19 | 66.3 | 13 | 0.031 | 1.03 | COMPARATIVE EXAMPLE |

| TEST No. | BASE STEEL SHEET | FIRST SURFACE SIDE FILM | SECOND SURFACE SIDE FILM | WAX | BASE STEEL SHEET SURFACE ROUGHNESS Ra (μm) | FILM LAYER MELTING POINT (°C) | THICKNESS (μm) | MELTING POINT (°C) | WAX LAYER PENETRATION | COATING WEIGHT (g/m²) | BASE STEEL SHEET SURFACE ROUGHNESS Ra (μm) | MELTING POINT (°C) | FILM LAYER MELTING POINT DIFFERENCE (°C) | THICKNESS (μm) | WAX LAYER MELTING POINT (°C) | PENETRATION | COATING WEIGHT (g/m²) | COATING WEIGHT RATIO | REMARKS |
|---|---|---|---|---|---|---|---|---|---|---|---|---|---|---|---|---|---|---|---|
| | | CONFIGURATION | | | | FIRST SURFACE SIDE | | | | | | | SECOND SURFACE SIDE | | | | | | |
| 23 | M2 | F3 | F5 | W5 | 0.10 | 215 | 25 | 66.3 | 13 | 0.030 | 0.10 | 227 | 12 | 19 | 66.3 | 13 | 0.040 | 1.33 | EXAMPLE |
| 24 | M2 | F3 | F5 | W5 | 0.10 | 215 | 25 | 66.3 | 13 | 0.100 | 0.10 | 227 | 12 | 19 | 66.3 | 13 | 0.135 | 1.35 | EXAMPLE |
| 25 | M2 | F3 | F5 | W5 | 0.10 | 215 | 25 | 66.3 | 13 | 0.100 | 0.10 | 227 | 12 | 19 | 66.3 | 13 | 0.140 | 1.40 | COMPARATIVE EXAMPLE |
| 26 | M2 | F3 | F5 | W6 | 0.10 | 215 | 25 | 69.4 | 11 | 0.020 | 0.10 | 227 | 12 | 19 | 69.4 | 11 | 0.030 | 1.50 | COMPARATIVE EXAMPLE |
| 27 | M2 | F3 | F5 | W6 | 0.10 | 215 | 25 | 69.4 | 11 | 0.030 | 0.10 | 227 | 12 | 19 | 69.4 | 11 | 0.031 | 1.03 | COMPARATIVE EXAMPLE |
| 28 | M2 | F3 | F5 | W6 | 0.10 | 215 | 25 | 69.4 | 11 | 0.030 | 0.10 | 227 | 12 | 19 | 69.4 | 11 | 0.040 | 1.33 | EXAMPLE |
| 29 | M2 | F3 | F5 | W6 | 0.10 | 215 | 25 | 69.4 | 11 | 0.100 | 0.10 | 227 | 12 | 19 | 69.4 | 11 | 0.135 | 1.35 | EXAMPLE |
| 30 | M2 | F3 | F5 | W6 | 0.10 | 215 | 25 | 69.4 | 11 | 0.100 | 0.10 | 227 | 12 | 19 | 69.4 | 11 | 0.140 | 1.40 | COMPARATIVE EXAMPLE |
| 31 | M2 | F3 | F5 | W1 | 0.10 | 215 | 25 | 48.0 | 29 | 0.080 | 0.10 | 227 | 12 | 19 | 48.0 | 29 | 0.100 | 1.25 | EXAMPLE |
| 32 | M2 | F3 | F5 | W1 | 0.10 | 215 | 25 | 48.0 | 29 | 0.020 | 0.10 | 227 | 12 | 19 | 48.0 | 29 | 0.030 | 1.50 | COMPARATIVE EXAMPLE |
| 33 | M2 | F3 | F5 | W1 | 0.10 | 215 | 25 | 48.0 | 29 | 0.110 | 0.10 | 227 | 12 | 19 | 48.0 | 29 | 0.140 | 1.27 | COMPARATIVE EXAMPLE |

EP 4 741 155 A1

TABLE 4-2

| TE-ST No. | CONFIGURATION | | | | FISRST SURFACE SIDE | | | | | | SECOND SURFACE SIDE | | | | | | | COAT-ING WEIGH-T RATIO | REMARKS |
|---|---|---|---|---|---|---|---|---|---|---|---|---|---|---|---|---|---|---|---|
| | BASE STE-EL SHE-ET | FIRST SUR-FACE SIDE FILM | SEC-OND SUR-FACE SIDE FILM | WA-X | BASE STEEL SHEET | FILM LAYER | | WAX LAYER | | | BASE STEEL SHEET | FILM LAYER | | | WAX LAYER | | | | |
| | | | | | SURFACE ROUGH-NESS Ra ($\mu$m) | MELT-ING POINT (°C) | THICK-NESS ($\mu$m) | MELT-ING POINT (°C) | PE-NET RA-TION | COAT-ING WEIGH-T (g/m$^2$) | SURFACE ROUGH-NESS Ra ($\mu$m) | MELT-ING POINT (°C) | MELTING POINT DIFFER-ENCE (°C) | THICK-NESS ($\mu$m) | MELT-ING POINT (°C) | PE-NET RA-TION | COAT-ING WEIGH-T (g/m$^2$) | | |
| 34 | M2 | F3 | F5 | W2 | 0.10 | 215 | 25 | 50.0 | 22 | 0.080 | 0.10 | 227 | 12 | 19 | 50.0 | 22 | 0.100 | 1.25 | EXAMPLE |
| 35 | M2 | F3 | F5 | W2 | 0.10 | 215 | 25 | 50.0 | 22 | 0.020 | 0.10 | 227 | 12 | 19 | 50.0 | 22 | 0.030 | 1.50 | COMPARA-TIVE EXAM-PLE |
| 36 | M2 | F3 | F5 | W2 | 0.10 | 215 | 25 | 50.0 | 22 | 0.110 | 0.10 | 227 | 12 | 19 | 50.0 | 22 | 0.140 | 1.27 | COMPARA-TIVE EXAM-PLE |
| 37 | M2 | F3 | F5 | W7 | 0.10 | 215 | 25 | 75.0 | 5 | 0.080 | 0.10 | 227 | 12 | 19 | 75.0 | 5 | 0.100 | 1.25 | EXAMPLE |
| 38 | M2 | F3 | F5 | W7 | 0.10 | 215 | 25 | 75.0 | 5 | 0.020 | 0.10 | 227 | 12 | 19 | 75.0 | 5 | 0.030 | 1.50 | COMPARA-TIVE EXAM-PLE |
| 39 | M2 | F3 | F5 | W7 | 0.10 | 215 | 25 | 75.0 | 5 | 0.110 | 0.10 | 227 | 12 | 19 | 75.0 | 5 | 0.140 | 1.27 | COMPARA-TIVE EXAM-PLE |
| 40 | M2 | F3 | F5 | W8 | 0.10 | 215 | 25 | 65.0 | 1 | 0.080 | 0.10 | 227 | 12 | 19 | 65.0 | 1 | 0.100 | 1.25 | EXAMPLE |
| 41 | M2 | F3 | F5 | W8 | 0.10 | 215 | 25 | 65.0 | 1 | 0.020 | 0.10 | 227 | 12 | 19 | 65.0 | 1 | 0.030 | 1.50 | COMPARA-TIVE EXAM-PLE |
| 42 | M2 | F3 | F5 | W8 | 0.10 | 215 | 25 | 65.0 | 1 | 0.110 | 0.10 | 227 | 12 | 19 | 65.0 | 1 | 0.140 | 1.27 | COMPARA-TIVE EXAM-PLE |
| 43 | M2 | F3 | F5 | W9 | 0.10 | 215 | 25 | 82.0 | 1 | 0.080 | 0.10 | 227 | 12 | 19 | 82.0 | 1 | 0.100 | 1.25 | EXAMPLE |
| 44 | M2 | F3 | F5 | W9 | 0.10 | 215 | 25 | 82.0 | 1 | 0.020 | 0.10 | 227 | 12 | 19 | 82.0 | 1 | 0.030 | 1.50 | COMPARA-TIVE EXAM-PLE |

(continued)

| TEST No. | CONFIGURATION | | | | FISRST SURFACE SIDE | | | | | | SECOND SURFACE SIDE | | | | | | | COATING WEIGHT RATIO | REMARKS |
| | BASE STEEL SHEET | FIRST SURFACE SIDE FILM | SECOND SURFACE SIDE FILM | WAX | BASE STEEL SHEET | FILM LAYER | | WAX LAYER | | | BASE STEEL SHEET | FILM LAYER | | | WAX LAYER | | | | |
| | | | | | SURFACE ROUGHNESS Ra (µm) | MELTING POINT (°C) | THICKNESS (µm) | MELTING POINT (°C) | PENETRATION | COATING WEIGHT (g/m²) | SURFACE ROUGHNESS Ra (µm) | MELTING POINT (°C) | MELTING POINT DIFFERENCE (°C) | THICKNESS (µm) | MELTING POINT (°C) | PENETRATION | COATING WEIGHT (g/m²) | | |
|---|---|---|---|---|---|---|---|---|---|---|---|---|---|---|---|---|---|---|---|
| 45 | M2 | F3 | F5 | W9 | 0.10 | 215 | 25 | 82.0 | 1 | 0.110 | 0.10 | 227 | 12 | 19 | 82.0 | 1 | 0.140 | 1.27 | COMPARATIVE EXAMPLE |
| 46 | M2 | F4 | F5 | W3 | 0.10 | 218 | 12 | 50.0 | 20 | 0.050 | 0.10 | 227 | 9 | 19 | 50.0 | 20 | 0.060 | 1.20 | EXAMPLE |
| 47 | M2 | F1 | F3 | W3 | 0.10 | 210 | 25 | 50.0 | 20 | 0.050 | 0.10 | 215 | 5 | 25 | 50.0 | 20 | 0.060 | 1.20 | EXAMPLE |
| 48 | M2 | F2 | F5 | W3 | 0.10 | 213 | 25 | 50.0 | 20 | 0.050 | 0.10 | 227 | 14 | 19 | 50.0 | 20 | 0.060 | 1.20 | EXAMPLE |
| 49 | M2 | F5 | F5 | W3 | 0.10 | 227 | 19 | 50.0 | 20 | 0.050 | 0.10 | 227 | 0 | 19 | 50.0 | 20 | 0.060 | 1.20 | EXAMPLE |
| 50 | M2 | F6 | F7 | W3 | 0.10 | 227 | 30 | 50.0 | 20 | 0.050 | 0.10 | 240 | 13 | 28 | 50.0 | 20 | 0.060 | 1.20 | EXAMPLE |
| 51 | M2 | F7 | F8 | W3 | 0.10 | 240 | 28 | 50.0 | 20 | 0.050 | 0.10 | 242 | 2 | 20 | 50.0 | 20 | 0.060 | 1.20 | EXAMPLE |
| 52 | M2 | F9 | F10 | W3 | 0.10 | 253 | 20 | 50.0 | 20 | 0.050 | 0.10 | 258 | 5 | 19 | 50.0 | 20 | 0.060 | 1.20 | EXAMPLE |
| 53 | M2 | F9 | F11 | W3 | 0.10 | 253 | 20 | 50.0 | 20 | 0.050 | 0.10 | 262 | 9 | 19 | 50.0 | 20 | 0.060 | 1.20 | EXAMPLE |
| 54 | M2 | F9 | F14 | W3 | 0.10 | 253 | 20 | 50.0 | 20 | 0.050 | 0.10 | 227 | -26 | 50 | 50.0 | 20 | 0.060 | 1.20 | EXAMPLE |
| 55 | M2 | F9 | F15 | W3 | 0.10 | 253 | 20 | 50.0 | 20 | 0.050 | 0.10 | 227 | -26 | 100 | 50.0 | 20 | 0.060 | 1.20 | EXAMPLE |
| 56 | M2 | F12 | F5 | W3 | 0.10 | 218 | 10 | 50.0 | 20 | 0.050 | 0.10 | 227 | 9 | 19 | 50.0 | 20 | 0.060 | 1.20 | EXAMPLE |
| 57 | M2 | F13 | F7 | W3 | 0.10 | 227 | 32 | 50.0 | 20 | 0.050 | 0.10 | 240 | 13 | 28 | 50.0 | 20 | 0.060 | 1.20 | EXAMPLE |
| 58 | M1 | F3 | F5 | W3 | 0.08 | 215 | 25 | 50.0 | 20 | 0.050 | 0.08 | 227 | 12 | 19 | 50.0 | 20 | 0.060 | 1.20 | EXAMPLE |
| 59 | M3 | F3 | F5 | W3 | 0.20 | 215 | 25 | 50.0 | 20 | 0.050 | 0.20 | 227 | 12 | 19 | 50.0 | 20 | 0.060 | 1.20 | EXAMPLE |
| 60 | M4 | F3 | F5 | W3 | 0.40 | 215 | 25 | 50.0 | 20 | 0.050 | 0.40 | 227 | 12 | 19 | 50.0 | 20 | 0.060 | 1.20 | EXAMPLE |
| 61 | M5 | F3 | F5 | W3 | 0.50 | 215 | 25 | 50.0 | 20 | 0.050 | 0.50 | 227 | 12 | 19 | 50.0 | 20 | 0.060 | 1.20 | EXAMPLE |
| 62 | M6 | F3 | F5 | W3 | 0.80 | 215 | 25 | 50.0 | 20 | 0.050 | 0.60 | 227 | 12 | 19 | 50.0 | 20 | 0.060 | 1.20 | EXAMPLE |
| 63 | M7 | F3 | F5 | W3 | 0.30 | 215 | 25 | 50.0 | 20 | 0.050 | 0.30 | 227 | 12 | 19 | 50.0 | 20 | 0.060 | 1.20 | EXAMPLE |
| 64 | M8 | F3 | F5 | W3 | 0.30 | 215 | 25 | 50.0 | 20 | 0.050 | 0.30 | 227 | 12 | 19 | 50.0 | 20 | 0.060 | 1.20 | EXAMPLE |
| 65 | M2 | F11 | F11 | W3 | 0.10 | 262 | 19 | 50.0 | 20 | 0.050 | 0.10 | 262 | 0 | 19 | 50.0 | 20 | 0.060 | 1.20 | EXAMPLE |

(continued)

| TEST No. | CONFIGURATION | | | | FIRST SURFACE SIDE | | | | | | SECOND SURFACE SIDE | | | | | | | | COATING WEIGHT RATIO | REMARKS |
|---|---|---|---|---|---|---|---|---|---|---|---|---|---|---|---|---|---|---|---|---|
| | BASE STEEL SHEET | FIRST SURFACE SIDE FILM | SECOND SURFACE SIDE FILM | WAX | BASE STEEL SHEET | FILM LAYER | | WAX LAYER | | | BASE STEEL SHEET | FILM LAYER | | | WAX LAYER | | | | | |
| | | | | | SURFACE ROUGHNESS Ra (μm) | MELTING POINT (°C) | THICKNESS (μm) | MELTING POINT (°C) | PENETRATION | COATING WEIGHT (g/m²) | SURFACE ROUGHNESS Ra (μm) | MELTING POINT (°C) | MELTING POINT DIFFERENCE (°C) | THICKNESS (μm) | MELTING POINT (°C) | PENETRATION | COATING WEIGHT (g/m²) | | |
| 66 | M2 | F14 | F7 | W3 | 0.10 | 227 | 50 | 50.0 | 20 | 0.050 | 0.10 | 240 | 13 | 28 | 50.0 | 20 | 0.060 | 1.20 | EXAMPLE |

25

For each film-laminated steel sheet prepared by the above method, a blank plate with a diameter of 126 mm was stamped out. Each obtained blank plate was subjected to shallow drawing at a speed of 60 cans/minute using a cupping press machine to be formed into a can shape. Subsequently, continuous iron forming was conducted at an average canmaking speed of 100 cans/minute using a drawn and ironing canmaking facility (body maker) with a punch stroke of 400 mm, employing a forming of two-stage drawing and three-stage ironing. During this process, each blank plate was arranged in the drawn and ironing canmaking facility such that the first surface side became the can outer surface side and the second surface side became the can inner surface side. Ironing conditions were set as follows: first stage drawing ratio: 1.75, second stage drawing ratio: 1.35, ironing punch diameter: 52.80 mm, total ironing ratio: 48%, and cans each with a height of 100 mm or more were prepared.

<Evaluation method>

Each DI can obtained as described above was evaluated based on "DI formability" and "film damage level". The evaluation details are as follows. Obtained evaluation results are summarized in Tables 5-1 and 5-2 below.

[Evaluation of DI formability]

The DI formability was evaluated in terms of "degree of deformation at the can end portion" and "cracking of the can bottom at the punch shoulder portion and degree of necking". The degree of deformation at the can end portion was evaluated as follows: when there was no deformation at the can end portion, it was rated as "A"; when slight deformation was observed at the can end portion, it was rated as "B"; and when jamming occurred, it was rated as "C". Scores "A" and "B" were determined to be acceptable.

The cracking of the can bottom at the punch shoulder portion and degree of necking were evaluated as follows: when there was no cracking of the can bottom at the punch shoulder portion and no necking, it was rated as "A"; when minute necking was observed at the can bottom punch shoulder portion, it was rated as "B", and when cracking of the steel sheet occurred at the can bottom punch shoulder portion, it was rated as "C". Scores "A" and "B" were determined to be acceptable.

[Evaluation of damage level on can outer surface side film surface of canned product]

The damage level on the can outer surface side film surface of the canned product prepared as described above was evaluated by visual inspection of appearance and by checking presence of film pinholes using a pinhole tester. When there was no film flaw or pressing flaw present on the can outer surface side film surface, it was rated as "A"; when the can outer surface side film surface had isolated minute pressing flaw, or when no visible flaw was present but the pinhole tester detected pinholes at five or more locations, it was rated as "B". When the can outer surface side film surface had scratches of film, or when a pressing flaw, which causes the steel sheet to dent, was present, it was rated as "C". Scores "A" and "B" were determined to be acceptable.

The pinhole defect detection using the pinhole tester was performed with a pinhole tester (TRC-250A) manufactured by Sanko Electronic Laboratory Co., Ltd. A carbon brush electrode was attached to an anode side of the pinhole tester, and a ground side was attached to a portion where a part of the film at the can end portion was scraped off using sandpaper. An entire can wall surface was then scanned with the carbon brush electrode at 500V.

[Evaluation of damage level on can inner surface side film surface of canned product]

The damage level in the can inner surface side film surface of the canned product was evaluated by conducting a colored ERV (enamel rate value) test on the canned products prepared as described above. When there was no colored ERV reaction area in the can inner surface side film surface, it was rated as "A". When there were five or fewer isolated, spot-like colored ERV reaction areas per can in the can inner surface side film surface, it was rated as "B". When there were more than five isolated, spot-like colored ERV reaction areas per can, or when linear to planar colored ERV reaction areas were present in the can inner surface side film surface, it was rated as "C". Scores "A" and "B" were determined to be acceptable.

The colored ERV test was conducted as follows. First, the inner surface of the canned product was cleaned with hexane to remove wax, and then, the can was filled with an ERV test solution (ERV test solution composition: $CuSO_4 \cdot 5H_2O$ [50 g/L], NaCl [60 g/L]). Next, a positive electrode rod of a digital enamel rate meter (Digital Enamel Rater NDE-1200, manufactured by Nichia Keisoku Kogyo Co., Ltd.) was immersed therein, and a negative electrode was connected to the can side, and a 6.3V current was applied for 15 seconds to precipitate copper sulfate crystals on an exposed metal surface.

Subsequently, a damage condition of the can inner surface side film surface was visually assessed.

[Table 5-1]

TABLE 5-1

| TEST No. | EVALUATION RESULT | | | | REMARKS |
| --- | --- | --- | --- | --- | --- |
| | DI MOLDABILITY | | FILM DAMAGE LEVEL | | |
| | DEGREE OF DEFORMATION AT CAN END PORTION | CRACKING OF CAN BOTTOM AT PUNCH SHOULDER-DEGREE OF NECKING | CAN OUTER SURFACE SIDE | CAN INNER SURFACE SIDE | |
| 1 | B | C | C | B | COMPARATIVE EXAMPLE |
| 2 | C | B | C | B | COMPARATIVE EXAMPLE |
| 3 | A | A | A | A | EXAMPLE |
| 4 | A | C | A | A | COMPARATIVE EXAMPLE |
| 5 | C | B | A | A | COMPARATIVE EXAMPLE |
| 6 | A | A | A | A | EXAMPLE |
| 7 | A | A | A | A | EXAMPLE |
| 8 | A | C | A | A | COMPARATIVE EXAMPLE |
| 9 | C | A | A | A | COMPARATIVE EXAMPLE |
| 10 | A | A | A | A | EXAMPLE |
| 11 | A | A | A | A | EXAMPLE |
| 12 | A | B | A | A | EXAMPLE |
| 13 | A | C | A | A | COMPARATIVE EXAMPLE |
| 14 | A | B | C | A | COMPARATIVE EXAMPLE |
| 15 | B | B | C | B | COMPARATIVE EXAMPLE |
| 16 | A | A | A | A | EXAMPLE |
| 17 | A | A | A | A | EXAMPLE |
| 18 | C | A | A | A | COMPARATIVE EXAMPLE |
| 19 | A | A | A | A | EXAMPLE |
| 20 | A | B | C | A | COMPARATIVE EXAMPLE |
| 21 | B | C | C | B | COMPARATIVE EXAMPLE |
| 22 | C | A | A | A | COMPARATIVE EXAMPLE |

(continued)

| TEST No. | EVALUATION RESULT | | | | REMARKS |
| | DI MOLDABILITY | | FILM DAMAGE LEVEL | | |
| | DEGREE OF DEFORMATION AT CAN END PORTION | CRACKING OF CAN BOTTOM AT PUNCH SHOULDER-DEGREE OF NECKING | CAN OUTER SURFACE SIDE | CAN INNER SURFACE SIDE | |
|---|---|---|---|---|---|
| 23 | A | A | A | A | EXAMPLE |
| 24 | A | A | A | A | EXAMPLE |
| 25 | A | C | A | A | COMPARATIVE EXAMPLE |
| 26 | B | C | C | B | COMPARATIVE EXAMPLE |
| 27 | C | A | A | A | COMPARATIVE EXAMPLE |
| 28 | A | A | A | A | EXAMPLE |
| 29 | A | A | A | A | EXAMPLE |
| 30 | A | C | A | A | COMPARATIVE EXAMPLE |
| 31 | A | A | B | A | EXAMPLE |
| 32 | B | C | C | B | COMPARATIVE EXAMPLE |
| 33 | A | A | C | A | COMPARATIVE EXAMPLE |

[Table 5-2]

TABLE 5-2

| TEST No. | EVALUATION RESULT | | | | REMARKS |
| | DI MOLDABILITY | | FILM DAMAGE LEVEL | | |
| | DEGREE OF DEFORMATION AT CAN END PORTION | CRACKING OF CAN BOTTOM AT PUNCH SHOULDER-DEGREE OF NECKING | CAN OUTER SURFACE SIDE | CAN INNER SURFACE SIDE | |
|---|---|---|---|---|---|
| 34 | A | A | B | A | EXAMPLE |
| 35 | B | C | C | B | COMPARATIVE EXAMPLE |
| 36 | A | B | C | A | COMPARATIVE EXAMPLE |
| 37 | A | A | B | A | EXAMPLE |
| 38 | B | C | C | A | COMPARATIVE EXAMPLE |
| 39 | A | A | C | A | COMPARATIVE EXAMPLE |
| 40 | A | A | B | B | EXAMPLE |

(continued)

| TEST No. | EVALUATION RESULT | | | | REMARKS |
| --- | --- | --- | --- | --- | --- |
| | DI MOLDABILITY | | FILM DAMAGE LEVEL | | |
| | DEGREE OF DEFORMATION AT CAN END PORTION | CRACKING OF CAN BOTTOM AT PUNCH SHOULDER-DEGREE OF NECKING | CAN OUTER SURFACE SIDE | CAN INNER SURFACE SIDE | |
| 41 | B | C | C | B | COMPARATIVE EXAMPLE |
| 42 | A | A | C | A | COMPARATIVE EXAMPLE |
| 43 | A | A | B | B | EXAMPLE |
| 44 | B | C | C | B | COMPARATIVE EXAMPLE |
| 45 | A | A | C | A | COMPARATIVE EXAMPLE |
| 46 | A | A | A | A | EXAMPLE |
| 47 | A | A | B | A | EXAMPLE |
| 48 | A | A | B | A | EXAMPLE |
| 49 | A | B | A | A | EXAMPLE |
| 50 | A | A | A | A | EXAMPLE |
| 51 | A | B | A | A | EXAMPLE |
| 52 | A | A | A | A | EXAMPLE |
| 53 | A | A | A | B | EXAMPLE |
| 54 | B | A | A | A | EXAMPLE |
| 55 | B | A | A | A | EXAMPLE |
| 56 | A | A | B | A | EXAMPLE |
| 57 | A | A | B | A | EXAMPLE |
| 58 | A | A | B | A | EXAMPLE |
| 59 | A | A | A | A | EXAMPLE |
| 60 | A | A | A | A | EXAMPLE |
| 61 | A | A | A | A | EXAMPLE |
| 62 | A | A | B | A | EXAMPLE |
| 63 | A | A | A | A | EXAMPLE |
| 64 | A | A | A | A | EXAMPLE |
| 65 | B | B | B | B | EXAMPLE |
| 66 | A | A | B | A | EXAMPLE |

As is clear from Tables 5-1 and 5-2 above, the film-laminated steel sheets corresponding to the examples of the present invention exhibit both excellent DI formability and low film damage level. In contrast, the film-laminated steel sheets corresponding to the comparative examples of the present invention were inferior in at least either the DI formability or the film damage level. Thus, the film-laminated steel sheets corresponding to the examples of the present invention are highly useful in DI forming because these exhibit excellent drawn and ironing workability, particularly good punch-withdrawing performance, making them less prone to can body buckling during continuous forming and providing excellent continuous DI formability.

Preferred embodiments of the present invention have been explained above in detail with reference to the attached drawings, but the present invention is not limited to the embodiments. It should be understood that various changes and modifications are readily apparent to those skilled in the art who have the common general knowledge in the technical field to which the present invention pertains, within the scope of the technical spirit as set forth in claims, and they should also be covered by the technical scope of the present invention.

The embodiments disclosed herein are examples in all respects and should not be considered to be restrictive. Various omissions, substitutions, and changes may be made in the embodiments without departing from the scope of the attached claims, and the configuration and the spirit belonging to the technical field of the present invention, as will be described. For example, configuration requirements of the above embodiments can be arbitrarily combined as long as the effects thereof are not impaired. From an arbitrary combination, the operations and effects regarding the configuration requirements relating to the combination can be naturally obtained, and other operations and other effects apparent to those skilled in the art are obtained from the description herein.

Besides, the effects explained herein are merely explanatory or illustrative in all respects and not restrictive. In other words, the technique relating to the present invention can offer other effects apparent to those skilled in the art from the description herein, in addition to or in place of the above effects.

EXPLANATION OF CODES

1      film-laminated steel sheet
10     base steel sheet
21     can outer surface side film layer
22     can inner surface side film layer
31     can outer surface side wax layer
32     can inner surface side wax layer

**Claims**

1. A film-laminated steel sheet, comprising:

   a steel sheet serving as a base material;
   a film layer formed by a thermoplastic polyester film provided on front and rear surfaces of the steel sheet; and
   a wax layer provided on the film layer, wherein
   a coating weight of the wax layer is within a range of 0.030 to 0.135 $g/m^2$ per side, and the coating weights of the wax layers are different between the front surface and rear surface of the steel sheet, and
   a coating weight ratio, which is obtained by dividing the coating weight of the wax layer on a side with a higher coating weight by the coating weight of the wax layer on a side with a lower coating weight, is within a range of 1.05 to 1.35.

2. The film-laminated steel sheet according to claim 1, wherein

   a melting point of the thermoplastic polyester film forming the film layer on the side with the lower coating weight is 215°C or higher and less than 255°C,
   a melting point of the thermoplastic polyester film forming the film layer on the side with the higher coating weight is 220 to 260°C, and the melting point of the thermoplastic polyester film on the side with the higher coating weight is 5°C or more higher than the melting point of the thermoplastic polyester film on the side with the lower coating weight.

3. The film-laminated steel sheet according to claim 1 or 2, wherein
   penetration of wax forming the wax layer specified in JIS K2235:2022 is 5 to 20 at a test temperature of 25°C, and a melting point of the wax is 50.0 to 70.0°C.

4. The film-laminated steel sheet according to any one of claims 1 to 3, wherein
   a thickness of the film layer on the side with the lower coating weight is 12 to 40 μm.

5. The film-laminated steel sheet according to any one of claims 1 to 4, wherein
   surface roughness of the steel sheet on the side with the lower coating weight, measured as arithmetic mean roughness Ra specified in JIS B0601:2013, is 0.10 to 0.50 μm.

6. The film-laminated steel sheet according to any one of claims 1 to 5, wherein
the coating weight of the wax layer is more than 0.120 g/m$^2$ and 0.135 g/m$^2$ or lower per side.

7. A method for manufacturing a DI can, which uses the film-laminated steel sheet according to any one of claims 1 to 6, comprising:

arranging the film-laminated steel sheet such that a surface on a side with a lower coating weight of a wax layer becomes a surface of the DI can on an outer surface side, and a surface on a side with a higher coating weight of the wax layer becomes a surface of the DI can on an inner surface side; and
subjecting the film-laminated steel sheet to DI forming.

**FIG. 1**

## INTERNATIONAL SEARCH REPORT

| International application No. |
|---|
| **PCT/JP2024/032024** |

**A. CLASSIFICATION OF SUBJECT MATTER**

*B32B 15/09*(2006.01)i; *B65D 1/12*(2006.01)i; *B65D 65/42*(2006.01)i
FI:   B32B15/09 A; B65D1/12; B65D65/42 C

According to International Patent Classification (IPC) or to both national classification and IPC

**B. FIELDS SEARCHED**

Minimum documentation searched (classification system followed by classification symbols)

B32B1/00-43/00; B65D1/00-1/48; B65D65/00-65/46

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2017/155099 A1 (NIPPON STEEL & SUMITOMO METAL CORPORATION) 14 September 2017 (2017-09-14)<br>entire text | 1-7 |
| A | JP 2009-90492 A (SAKURANOMIYA CHEMICAL CO., LTD.) 30 April 2009 (2009-04-30)<br>entire text | 1-7 |
| A | JP 2010-23442 A (TOYO BOSEKI KABUSHIKI KAISHA) 04 February 2010 (2010-02-04)<br>entire text | 1-7 |
| A | JP 2002-264258 A (NKK CORP.) 18 September 2002 (2002-09-18)<br>entire text | 1-7 |
| A | JP 2004-106246 A (NIPPON STEEL CORPORATION) 08 April 2004 (2004-04-08)<br>entire text | 1-7 |
| A | JP 2009-78543 A (TOYO BOSEKI KABUSHIKI KAISHA) 16 April 2009 (2009-04-16)<br>entire text | 1-7 |

☑ Further documents are listed in the continuation of Box C.    ☑ See patent family annex.

\*    Special categories of cited documents:
"A"   document defining the general state of the art which is not considered to be of particular relevance
"D"   document cited by the applicant in the international application
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| **15 October 2024** | **29 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
|---|
| **PCT/JP2024/032024** |

**C. DOCUMENTS CONSIDERED TO BE RELEVANT**

| Category* | Citation of document, with indication, where appropriate, of the relevant passages | Relevant to claim No. |
|---|---|---|
| A | JP 2015-3450 A (TOYO SEIKAN KAISHA LTD.) 08 January 2015 (2015-01-08)<br>entire text | 1-7 |

Form PCT/ISA/210 (second sheet) (July 2022)

## INTERNATIONAL SEARCH REPORT
### Information on patent family members

International application No.

**PCT/JP2024/032024**

| Patent document cited in search report | | | Publication date (day/month/year) | Patent family member(s) | | | Publication date (day/month/year) |
|---|---|---|---|---|---|---|---|
| WO | 2017/155099 | A1 | 14 September 2017 | US | 2019/0092543 | A1 | |
| | | | | EP | 3427945 | A1 | |
| | | | | CN | 108778717 | A | |
| | | | | TW | 201733808 | A | |
| JP | 2009-90492 | A | 30 April 2009 | (Family: none) | | | |
| JP | 2010-23442 | A | 04 February 2010 | (Family: none) | | | |
| JP | 2002-264258 | A | 18 September 2002 | US | 2005/0260417 | A1 | |
| | | | | EP | 1380413 | A1 | |
| | | | | CA | 2440334 | A | |
| JP | 2004-106246 | A | 08 April 2004 | (Family: none) | | | |
| JP | 2009-78543 | A | 16 April 2009 | (Family: none) | | | |
| JP | 2015-3450 | A | 08 January 2015 | US | 2016/0115346 | A1 | |
| | | | | EP | 3012100 | A1 | |
| | | | | TW | 201511938 | A | |
| | | | | CN | 105324242 | A | |

Form PCT/ISA/210 (patent family annex) (July 2022)

**EP 4 741 155 A1**

**Patent documents cited in the description**

- JP 2009184262 A

- JP 2009023193 A